(19) Europäisches Patentamt / European Patent Office / Office européen des brevets

(11) **EP 3 960 307 B1**

(12) **EUROPEAN PATENT SPECIFICATION**

(45) Date of publication and mention
of the grant of the patent:
**10.12.2025 Bulletin 2025/50**

(21) Application number: **20796025.3**

(22) Date of filing: **21.04.2020**

(51) International Patent Classification (IPC):
*B05D 1/26* (2006.01)    *B05D 1/36* (2006.01)
*B05D 7/00* (2006.01)    *B05D 7/24* (2006.01)
*B32B 27/36* (2006.01)    *C09D 5/02* (2006.01)
*C09D 167/00* (2006.01)    *B41J 2/01* (2006.01)
*B41M 5/00* (2006.01)    *C09D 7/20* (2018.01)

(52) Cooperative Patent Classification (CPC):
(C-Sets available)
**B05D 5/04; B05D 7/544; C08G 63/183;
C08G 63/189; C08G 63/6886; C09D 5/022;
C09D 7/20; C09D 11/023; C09D 11/104;
C09D 11/322; C09D 11/40; C09D 11/54;
C09D 167/02;** B05D 1/26; B05D 7/04;    (Cont.)

(86) International application number:
**PCT/JP2020/017131**

(87) International publication number:
**WO 2020/218270 (29.10.2020 Gazette 2020/44)**

(54) **TREATMENT LIQUID**

BEHANDLUNGSFLÜSSIGKEIT

LIQUIDE DE TRAITEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.04.2019 JP 2019086157**

(43) Date of publication of application:
**02.03.2022 Bulletin 2022/09**

(73) Proprietor: **Kao Corporation
Tokyo 103-8210 (JP)**

(72) Inventors:
• **MATSUMOTO, Yuta
Wakayama-shi, Wakayama 640-8580 (JP)**
• **EGAWA, Tsuyoshi
Wakayama-shi, Wakayama 640-8580 (JP)**
• **KURODA, Azusa
Wakayama-shi, Wakayama 640-8580 (JP)**
• **SAKAUE, Sho
Wakayama-shi, Wakayama 640-8580 (JP)**

(74) Representative: **Hoffmann Eitle
Patent- und Rechtsanwälte PartmbB
Arabellastraße 30
81925 München (DE)**

(56) References cited:
WO-A1-2017/169844    WO-A1-2019/131532
WO-A1-2019/188852    JP-A- 2000 335 093
JP-A- 2000 335 093    JP-A- 2001 150 620
JP-A- 2002 321 452    JP-A- 2003 200 660
JP-A- H05 229 246

(52) Cooperative Patent Classification (CPC): (Cont.)
B05D 2201/02; B05D 2350/60; B05D 2420/01;
B05D 2420/02; B41M 5/0011; B41M 5/0017;
B41M 5/0047; B41M 5/0064

C-Sets
B05D 2420/01, B05D 2401/21, B05D 2508/00;
B05D 2420/02, B05D 2401/20

**Description**

FIELD OF THE INVENTION

The present invention relates to a treating liquid, a surface-treated low-liquid absorbing substrate including a surface treatment layer formed of the treating liquid, an ink set including the treating liquid, and an image-forming method using the treating liquid.

BACKGROUND OF THE INVENTION

In the application fields of commercial printing or industrial printing, it has been required to print characters or images not only on high-liquid absorbing substrates conventionally called a plain paper or a copying paper, but also on substrates for commercial printing purposes such as a low-liquid absorbing coated paper such as an offset coated paper or a non-liquid absorbing resin film such as a polyethylene terephthalate (PET) film, a polyvinyl chloride (PVC) film, a polyethylene (PE) film, a polypropylene (PP) film, a nylon (NY) film, etc.

When conducting formation of printed characters or images on the low-liquid absorbing or non-liquid absorbing substrate, there tend to occur problems such as insufficient adhesion properties of an ink to such a substrate and deterioration in quality of the printed characters or images owing to slow absorption or no absorption of liquid components of the ink into the substrate. In consequence, in order to improve adhesion properties of the ink to the substrate and quality of the printed characters or images, there has been proposed an image-forming method for forming the printed characters or images in which by preliminarily applying a treating liquid containing a component capable of flocculating pigment particles contained in the ink onto a surface of the substrate, the pigment particles can be flocculated together even on the surface of the substrate that permits merely slow absorption of the liquid components of the ink thereinto.

JP 2013-072045A (Patent Literature 1) aims at providing an ink set that is capable of not only suppressing unevenness of coating of a treating liquid, but also forming images whose surface is free of roughness, etc., and discloses an ink set that contains an ink composition containing a pigment and water, and a treating liquid containing a water-soluble polymer compound, an organic acid compound, a silicone oil and water, etc. In the Patent Literature 1, an ordinary printing paper mainly formed of a cellulose is used as a printing substrate.

JP 2009-241586A (Patent Literature 2) aims at providing an image-printing method that is capable of printing images having high reproducibility, and discloses an image-printing method that includes a treating liquid-applying step of applying an aqueous treating liquid containing a water-soluble organic solvent having an SP value of not more than 13, resin particles, water and an acid as a fixing agent onto a printing medium having a water absorption of not more than 14 mL/m$^2$, a barrier coat layer-forming step of drying the aqueous treating liquid applied to the printing medium to remove water therefrom, thereby forming a barrier coat layer on the printing medium, and an image-printing step of ejecting an aqueous ink containing a pigment, resin particles and a water-soluble organic solvent onto the barrier coat layer by an ink-jetting method to print images thereon, etc.

JP 2000 335093 A describes a recording material comprising an ink receptive layer of a porous structure obtained by coating at least one surface of a light non-transmissive base material with a coating liquid obtained by emulsifying or dispersing a non-water absorbing thermoplastic resin having particles and a glass transition temperature (Tg) of -5°C or above in a solvent mainly made of water, and then drying and removing the solvent.

WO 2019/188852 A1 (see also EP 3 778 249 A1) describes a pretreatment liquid for recording an image on an impermeable base material with an aqueous ink, the pretreatment liquid including an aqueous medium, a resin (a) having a glass transition temperature of lower than 25°C, and particles of a resin (b) having a glass transition temperature of 25°C or higher.

SUMMARY OF THE INVENTION

The present invention relates to a treating liquid containing a polyester resin (a) in the form of an emulsion thereof and a solvent (b-1) having a solubility parameter of not less than 15 (MPa)$^{1/2}$ and not more than 27 (MPa)$^{1/2}$, in which:

the polyester resin (a) contains sulfonic acid groups, and a density of the sulfonic acid groups in the polyester resin (a) is not less than 0.1 mmol/g and not more than 0.8 mmol/g;
characterized in that the content of the polyester resin (a) in the treating liquid is not less than 15% by mass; and the content of the solvent (b-1) in the treating liquid is not less than 1% by mass and not more than 10% by mass.

DETAILED DESCRIPTION OF THE INVENTION

The technologies described in the Patent Literatures 1 and 2 have failed to obtain not only an ink that is satisfactory in adhesion properties thereof to a low-liquid absorbing substrate, but also a printed material that is satisfactory in image sharpness and image uniformity. The treating liquids described in the Patent Literatures 1 and 2 contain an organic acid and exhibit a low pH vale, and therefore have posed such a problem that when subjecting an ink to impaction and transfer onto a printing substrate, etc., pigment particles contained in the ink tend to be flocculated together, so that the resulting printed material tends to be deteriorated in image sharpness and image uniformity. Moreover, the printed material having insufficient image uniformity tends to be deteriorated in color developability.

The present invention relates to a treating liquid capable of not only allowing an ink to exhibit excellent adhesion properties to a low-liquid absorbing substrate, but also providing a printed material that is excellent in image sharpness and image uniformity, even when printed on the low-liquid absorbing substrate; a surface-treated low-liquid absorbing substrate including a surface treatment layer formed of the treating liquid; an ink set including the treating liquid; and an image-forming method using the treating liquid.

The term "low-liquid absorbing" as used in the present specification means a concept including both of low-liquid absorbing properties and non-liquid absorbing properties. More specifically, the "low-liquid absorbing" means that a water absorption per a unit surface area of a printing substrate as measured by contacting the substrate with pure water for 100 milliseconds is not less than 0 $g/m^2$ and not more than 6 $g/m^2$. The water absorption of the printing substrate may be measured by the method described in Examples below using an automatic scanning absorptometer, and is hereinafter also defined in the same way.

The present inventors have found that a treating liquid that contains a polyester resin in the form of an emulsion thereof in which the polyester resin contains sulfonic acid groups and a density of the sulfonic acid groups in the polyester resin is controlled to a specific range, is capable of not only allowing an ink to exhibit excellent adhesion properties to a low-liquid absorbing substrate, but also providing a printed material that is excellent in image sharpness and image uniformity.

That is, the present invention relates to the following aspects [1] to [4].

[1] A treating liquid containing a polyester resin (a) in the form of an emulsion thereof and a solvent (b-1) having a solubility parameter of not less than 15 $(MPa)^{1/2}$ and not more than 27 $(MPa)^{1/2}$, in which:

the polyester resin (a) contains sulfonic acid groups, and a density of the sulfonic acid groups in the polyester resin (a) is not less than 0.1 mmol/g and not more than 0.8 mmol/g
characterized in that
the content of the polyester resin (a) in the treating liquid is not less than 15% by mass; and
the content of the solvent (b-1) in the treating liquid is not less than 1% by mass and not more than 10% by mass.

[2] A surface-treated low-liquid absorbing substrate including a surface treatment layer formed of the treating liquid according to the above aspect [1].
[3] An ink set including the treating liquid according to the above aspect [1] and a water-based ink containing at least a colorant (I) and water.
[4] An image-forming method including the following step 1 and step 2:

Step 1: applying the treating liquid according to the above aspect [1] onto a surface of a low-liquid absorbing substrate and drying the treating liquid on the low-liquid absorbing substrate to obtain a surface-treated low-liquid absorbing substrate; and
Step 2: printing characters or images on a treated surface of the surface-treated low-liquid absorbing substrate obtained in the step 1 by an ink-jet printing method.

In accordance with the present invention, there can be provided a treating liquid capable of not only allowing an ink to exhibit excellent adhesion properties to a low-liquid absorbing substrate, but also providing a printed material that is excellent in image sharpness and image uniformity, even when printed on the low-liquid absorbing substrate; a surface-treated low-liquid absorbing substrate including a surface treatment layer formed of the treating liquid; an ink set including the treating liquid; and an image-forming method using the treating liquid.

[Treating Liquid]

The treating liquid of the present invention is a treating liquid containing a polyester resin (a) in the form of an emulsion thereof, i.e., a treating liquid containing the below-mentioned polyester resin emulsion (A), in which the polyester resin (a) contains sulfonic acid groups, and a density of the sulfonic acid groups in the polyester resin (a) is not less than 0.1 mmol/g and not more than 0.8 mmol/g. The treating liquid of the invention also contains a solvent (b-1) having a solubility parameter of not less than 15 $(MPa)^{1/2}$ and not more than 27 $(MPa)^{1/2}$. The content of the polyester resin (a) in the treating liquid is not less than 15% by mass and the content of the solvent (b-1) in the treating liquid is not less than 1% by mass and not more than 10% by mass.

The treating liquid of the present invention may be used for surface treatment of a substrate on which printed characters or images are to be formed using an ink.

The treating liquid of the present invention is capable of not only allowing an ink to exhibit excellent adhesion properties to a low-liquid absorbing substrate, but also providing a printed material that is excellent in image sharpness and image uniformity, even when printed on the low-liquid absorbing substrate, and therefore is preferably used in printing operations using the low-liquid absorbing substrate. The printing method using the low-liquid absorbing substrate is not particularly limited, and as the printing method, there may be mentioned flexographic printing, gravure printing, ink-jet printing, and the like. Among these printing methods, the treating liquid is preferably applied to the ink-jet printing method, since when printing characters or images on the low-liquid absorbing substrate by the ink-jet printing method, the treating liquid allows the ink to exhibit excellent adhesion properties to the low-liquid absorbing substrate and is capable of providing a printed material that is excellent in image sharpness and image uniformity.

According to the present invention, it is possible to allow an ink to exhibit excellent adhesion properties to a low-liquid absorbing substrate (hereinafter also referred to merely as "substrate-adhesion properties"), and provide a printed material that is excellent in image sharpness and image uniformity (hereinafter also referred to merely as "image sharpness" and "image uniformity", respectively), even when printed on the low-liquid absorbing substrate. The reason why the aforementioned advantageous effects can be attained by the present invention is considered as follows though it is not clearly determined yet.

That is, since the treating liquid of the present invention contains a polyester resin (a) in the form of an emulsion thereof and the polyester resin (a) has a specific polymer skeleton, the ink used with such a treating liquid can be improved in adhesion properties to the low-liquid absorbing substrate. In addition, it is considered that since respective sulfonic acid groups contained in the polyester resin (a) have high hydrophilicity, the treating liquid can be improved in affinity to the ink, so that the resulting printed material can be improved in image uniformity. However, if the density of the sulfonic acid groups in the polyester resin (a) is too high, the treating liquid tends to be dissolved in the ink, so that the resulting printed characters or images tend to become unclear. In consequence, it is considered that by controlling the density of the sulfonic acid groups in the polyester resin (a) contained in the treating liquid into a specific range, it is possible to suppress dissolution of the treating liquid itself into the ink and improve image uniformity of the resulting printed material while maintaining good image sharpness thereof, and as a result, it is possible to suppress deterioration in color developability of the printed material.

<Polyester Resin (a)>

The treating liquid of the present invention (hereinafter also referred to merely as a "treating liquid") contains a polyester resin (a) in the form of an emulsion thereof from the viewpoint of improving substrate-adhesion properties of the ink by forming a flocculated material when allowing the treating liquid to contact with the ink.

The treating liquid of the present invention may be prepared by compounding a polyester resin emulsion (A) containing the polyester resin (a) therein.

The polyester resin emulsion (A) is prepared by dispersing the polyester resin (a) in water or an aqueous medium formed of water and a water-soluble organic solvent, in which the polyester resin (a) contains sulfonic acid groups, and a density of the sulfonic acid groups in the polyester resin (a) is not less than 0.1 mmol/g and not more than 0.8 mmol/g.

The aforementioned aqueous medium preferably contains water as a main component. The content of water in the aqueous medium is preferably not less than 70% by mass, more preferably not less than 80% by mass and even more preferably not less than 90% by mass, and is also not more than 100% by mass, from the viewpoint of improving dispersion stability of the polyester resin emulsion as well as attaining environmental safety.

As the water contained in the polyester resin emulsion (A), there is preferably used deionized water, ion-exchanged water or distilled water. Examples of the components other than water which may be contained in the aqueous medium include water-soluble organic solvents which can be dissolved in water, e.g., alcohol-based solvents such as methanol, ethanol, isopropanol, butanol, etc.; ketone-based solvents such as acetone, methyl ethyl ketone, etc.; ether-based solvents such as tetrahydrofuran, etc.; and the like.

The polyester resin (a) contains sulfonic acid groups ($-SO_3M^1$) which may be at least partially formed into a salt, i.e., in the aforementioned chemical formula, $M^1$ is a hydrogen atom, an alkali metal, ammonium or an organic ammonium.

The polyester resin (a) is obtained by subjecting a carboxylic acid component and an alcohol component to polycondensation reaction, and preferably contains a constitutional structure derived from a sulfonic acid group-containing compound and more preferably at least one constitutional unit selected from the group consisting of a constitutional unit derived from sulfoisophthalic acid and a constitutional unit derived from sulfoterephthalic acid. In addition, these constitutional units may be constitutional units derived from derivatives of these acids.

Examples of the sulfonic acid group-containing compound include a sulfonic acid group-containing carboxylic acid component and a sulfonic acid group-containing alcohol component. Among these sulfonic acid group-containing compounds, preferred is the sulfonic acid group-containing carboxylic acid component (a-1) (hereinafter also referred to merely as a "component (a-1)").

Examples of the sulfonic acid group -containing carboxylic acid component (a-1) include sulfonic acid group-containing aromatic dicarboxylic acids, e.g., sulfoisophthalic acids such as 5-sulfoisophthalic acid, etc., sulfoterephthalic acids such as 2-sulfoterephthalic acid, etc., and sulfonaphthalenedicarboxylic acids such as 4-sulfo-2,6-naphthalenedicarboxylic acid, etc., and derivatives of these acids. Examples of the derivatives of the sulfonic acid group-containing aromatic dicarboxylic acids include metal salts such as a sodium salt, a potassium salt, a lithium salt, etc., anhydrides, alkyl (having not less than 1 and not more than 3 carbon atoms) esters, halides and the like of the acids. Among these sulfonic acid group-containing carboxylic acid components, preferred are sulfonic acid group-containing aromatic dicarboxylic acids and derivatives thereof, more preferred is at least one compound selected from the group consisting of sulfoisophthalic acids, sulfoterephthalic acids and derivatives thereof, and even more preferred are sulfoisophthalic acids and derivatives thereof.

The content of the sulfonic acid group-containing carboxylic acid component (a-1) in the carboxylic acid component as a raw material monomer of the polyester resin (a) is preferably not less than 10 mol%, more preferably not less than 15 mol% and even more preferably not less than 17 mol%, and is also preferably not more than 30 mol%, more preferably not more than 28 mol%, even more preferably not more than 26 mol% and further even more preferably not more than 24 mol%, from the viewpoint of improving substrate-adhesion properties of the ink as well as image sharpness and image uniformity of the resulting printed material.

The content of the sulfonic acid group-containing carboxylic acid component (a-1) in the carboxylic acid component as a raw material monomer of the polyester resin (a) is preferably not less than 3 mol%, more preferably not less than 4 mol% and even more preferably not less than 5 mol% from the viewpoint of improving image uniformity of the resulting printed material when printed using a black ink, and is also preferably not more than 20 mol%, more preferably not more than 15 mol% and even more preferably not more than 10 mol% from the viewpoint of improving image sharpness of the resulting printed material as well as from the viewpoint of improving image uniformity of the resulting printed material when printed using a white ink.

The polyester resin (a) preferably contains a constitutional unit derived from the sulfonic acid group-containing carboxylic acid component (a-1), a constitutional unit derived from a sulfonic acid group-free carboxylic acid component (a-2) and a constitutional unit derived from an alcohol component (a-3) from the viewpoint of improving substrate-adhesion properties of the ink, and image sharpness and image uniformity of the resulting printed material.

The sulfonic acid group-free carboxylic acid component (a-2) (hereinafter also referred to merely as a "component (a-2)") includes derivatives of sulfonic acid group-free carboxylic acids. As the derivatives of the sulfonic acid group-free carboxylic acids, there may be mentioned the same kinds of derivatives as described with respect to those derivatives of the aforementioned sulfonic acid group-containing carboxylic acid component (a-1).

Examples of the preferred sulfonic acid group-free carboxylic acid component (a-2) include aromatic dicarboxylic acids, aliphatic dicarboxylic acids, alicyclic dicarboxylic acids, and trivalent or higher-valent polycarboxylic acids. Among these sulfonic acid group-free carboxylic acid components, from the viewpoint of improving substrate-adhesion properties of the ink, and image sharpness and image uniformity of the resulting printed material, more preferred are aromatic dicarboxylic acids and aliphatic dicarboxylic acids, and even more preferred are aromatic dicarboxylic acids.

Examples of the preferred aromatic dicarboxylic acids include phthalic acid, isophthalic acid, terephthalic acid and naphthalenedicarboxylic acid. Among these aromatic dicarboxylic acids, more preferred are terephthalic acid and naphthalenedicarboxylic acid.

Examples of the aliphatic dicarboxylic acids include unsaturated aliphatic dicarboxylic acids such as fumaric acid, maleic acid, etc.; and saturated aliphatic dicarboxylic acids such as adipic acid, succinic acid (which may be substituted with an alkyl group and/or an alkenyl group), etc.

Examples of the alicyclic dicarboxylic acids include cyclohexanedicarboxylic acid, decalindicarboxylic acid and tetrahydrophthalic acid.

Examples of the trivalent or higher-valent polycarboxylic acids include trimellitic acid, 2,5,7-naphthalenetricarboxylic acid, pyromellitic acid and the like.

The aforementioned carboxylic acid components may be used alone or in combination of any two or more thereof.

The content of the sulfonic acid group-free carboxylic acid component (a-2) in the carboxylic acid component as a raw material monomer of the polyester resin (a) is preferably not less than 70 mol%, more preferably not less than 72 mol%, even more preferably not less than 74 mol% and further even more preferably not less than 76 mol%, and is also preferably not more than 90 mol%, more preferably not more than 85 mol% and even more preferably not more than 83 mol%, from the viewpoint of improving substrate-adhesion properties of the ink, and image sharpness and image uniformity of the resulting printed material.

The content of the sulfonic acid group-free carboxylic acid component (a-2) in the carboxylic acid component as a raw material monomer of the polyester resin (a) is preferably not less than 80 mol%, more preferably not less than 85 mol% and even more preferably not less than 90 mol% from the viewpoint of improving image sharpness of the resulting printed material as well as from the viewpoint of improving image uniformity of the resulting printed material when printed using a white ink, and is also preferably not more than 97 mol%, more preferably not more than 96 mol% and even more preferably not more than 95 mol% from the viewpoint of improving image uniformity of the resulting printed material when printed using a black ink.

Examples of the alcohol component (a-3) as a raw material monomer of the polyester resin (a) include diols, trivalent or higher-valent polyhydric alcohols and the like. Among these alcohol components, preferred are diols.

Examples of the diols include aliphatic diols having not less than 2 and not more than 12 main-chain carbon atoms, alicyclic diols, aromatic diols and the like.

Examples of the aliphatic diols include $\alpha,\omega$-alkanediols such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,12-dodecanediol, etc.; aliphatic diols having not less than 3 and not more than 6 carbon atoms which contain a hydroxy group bonded to a secondary carbon atom therein, such as 1,2-propanediol, 2,2-dimethyl-1,3-propanediol, 1,2-butanediol, 1,3-butanediol, 2,3-butanediol, 1,2-pentanediol, 1,4-pentanediol, 2,4-pentanediol, 1,2-hexanediol, 1,5-hexanediol, 2,5-hexanediol, 3,3-dimethyl-1,2-butanediol, etc.; and the like.

Examples of the alicyclic diols include 1,4-cyclohexanediol, hydrogenated bisphenol A (2,2-bis(4-hydroxycyclohexyl)propane) and alkyleneoxide (having not less than 2 and not more than 4 carbon atoms) adducts (average molar number of addition of alkyleneoxide: not less than 2 and not more than 16) of these compounds, alkyleneoxide (having not less than 2 and not more than 4 carbon atoms) adducts (average molar number of addition of alkyleneoxide: not less than 2 and not more than 16) of bis(4-hydroxyphenyl)propane, and the like.

Examples of the aromatic diols include hydroquinone, 1,4-benzene dimethanol, 4,4'-dihydroxydiphenylmethane, 2,2-bis(4-hydroxyphenyl)propane, 1,5-dihydroxynaphthalene, and the like.

Examples of the trivalent or higher-valent polyhydric alcohols include glycerin, pentaerythritol, trimethylolpropane, sorbitol and alkylene (having not less than 2 and not more than 4 carbon atoms) oxide adducts (average molar number of addition of alkyleneoxide: not less than 1 and not more than 16) of these compounds, and the like.

Of these alcohol components, preferred are aliphatic diols, more preferred are $\alpha,\omega$-alkanediols, and even more preferred is ethylene glycol.

The aforementioned alcohol components may be used alone or in combination of any two or more thereof.

The content of the aliphatic diols in the alcohol component as a raw material monomer of the polyester resin (a) is preferably not less than 50 mol%, more preferably not less than 60 mol%, even more preferably not less than 70 mol% and further even more preferably not less than 90 mol%, and is also preferably not more than 100 mol%, from the viewpoint of improving substrate-adhesion properties of the ink, and image sharpness and image uniformity of the resulting printed material.

From the viewpoint of improving substrate-adhesion properties of the ink, and image sharpness and image uniformity of the resulting printed material, the polyester resin (a) preferably contains a constitutional unit derived from the sulfonic acid group-containing carboxylic acid component (a-1) and a constitutional unit derived from the sulfonic acid group-free carboxylic acid component (a-2), more preferably a constitutional unit derived from a sulfonic acid group-containing aromatic dicarboxylic acid component and a constitutional unit derived from a sulfonic acid group-free aromatic dicarboxylic acid component, even more preferably a constitutional unit derived from sulfoisophthalic acid and a constitutional unit derived from at least one aromatic dicarboxylic acid selected from the group consisting of terephthalic acid and naphthalenedicarboxylic acid, and further even more preferably a constitutional unit derived from sulfoisophthalic acid and a constitutional unit derived from terephthalic acid.

The molar ratio of the constitutional unit derived from the component (a-1) to the constitutional unit derived from the component (a-2) [(a-1)(a-2)] is preferably not less than 5/95, more preferably not less than 10/90 and even more preferably not less than 15/85, and is also preferably not more than 50/50, more preferably not more than 40/60, even more preferably not more than 30/70 and further even more preferably not more than 20/80.

The molar ratio of the constitutional unit derived from the component (a-1) to the constitutional unit derived from the component (a-2) [(a-1)(a-2)] is preferably not less than 3/97, more preferably not less than 4/96 and even more preferably not less than 5/95 from the viewpoint of improving image uniformity of the resulting printed material when printed using a black ink, and is also preferably not more than 20/80, more preferably not more than 15/85 and even more preferably not more than 10/90 from the viewpoint of improving image sharpness of the resulting printed characters or images as well as from the viewpoint of improving improving image uniformity of the resulting printed material when printed using a white ink.

In the case where the polyester resin (a) contains the constitutional unit derived from the sulfonic acid group-containing carboxylic acid component (a-1) and the constitutional unit derived from the sulfonic acid group-free carboxylic acid component (a-2), the total content of the constitutional unit derived from the sulfonic acid group-containing carboxylic acid component (a-1) and the constitutional unit derived from the sulfonic acid group-free carboxylic acid component (a-2) in the carboxylic acid component as a raw material monomer of the polyester resin (a) is preferably not less than 50 mol%, more preferably not less than 70 mol% and even more preferably not less than 90 mol%, and is also preferably not more than 100 mol%, and furthermore preferably 100 mol%.

(Production of Polyester Resin (a))

The polyester resin (a) may be produced by subjecting at least the carboxylic acid component and the alcohol component to polycondensation reaction. The preferred embodiments and contents of the carboxylic acid component and the alcohol component are respectively the same as those described previously.

The polyester resin (a) may be produced, for example, by subjecting the aforementioned carboxylic acid component and the aforementioned alcohol component to polycondensation reaction at a temperature of not lower than 180°C and not higher than 250°C in an inert gas atmosphere, if required in the presence of an esterification catalyst.

Examples of the esterification catalyst include a tin catalyst, a titanium catalyst, metal compounds such as antimony trioxide, zinc acetate, germanium dioxide, etc., and the like. Among these esterification catalysts, the tin catalyst is preferably used from the viewpoint of improving reaction efficiency of the esterification reaction upon production of the polyester. Examples of the preferred tin catalyst include dibutyl tin oxide, tin (II) di(2-ethyl hexanoate) or salts of these compounds, and the like. Among these tin catalysts, more preferred is tin (II) di(2-ethyl hexanoate).

The amount of the esterification catalyst used is preferably not less than 0.1% by mass and more preferably not less than 0.3% by mass, and is also preferably not more than 1% by mass and more preferably not more than 0.7% by mass, on the basis of the whole amount of the raw material monomers constituting the polyester resin (a).

In addition to the aforementioned esterification catalyst, if required, an esterification co-catalyst such as 3,4,5-trihydroxybenzoic acid (identical to "gallic acid"), etc., may be further used in the esterification reaction.

In addition, a radical polymerization inhibitor such as 4-*tert*-butyl catechol, hydroquinone, etc., may also be used in combination with the aforementioned components.

The density of the sulfonic acid groups in the polyester resin (a) is not less than 0.1 mmol/g, preferably not less than 0.15 mmol/g, more preferably not less than 0.2 mmol/g and even more preferably not less than 0.25 mmol/g from the viewpoint of improving substrate-adhesion properties of the ink, and image sharpness and image uniformity of the resulting printed material, and is also not more than 0.8 mmol/g, preferably not more than 0.6 mmol/g, more preferably not more than 0.5 mmol/g, even more preferably not more than 0.4 mmol/g, further even more preferably not more than 0.35 mmol/g and still further even more preferably not more than 0.3 mmol/g from the same viewpoint as described above.

In the present invention, the density of the sulfonic acid groups in the polyester resin (a) may be calculated from the respective constitutional units of the polyester resin (a). In addition, if the constitutional units of the polyester resin (a) is unknown, the density of the sulfonic acid groups in the polyester resin (a) may be derived from an amount of a sulfur element contained therein which is quantitatively determined by elemental analysis (ion chromatography).

In addition, the weight-average molecular weight (Mw) of the polyester resin (a) is preferably not less than 5,000, more preferably not less than 7,500 and even more preferably not less than 10,000 from the viewpoint of improving substrate-adhesion properties of the ink, and image sharpness and image uniformity of the resulting printed material, and is also preferably not more than 100,000, more preferably not more than 50,000, even more preferably not more than 30,000 and further even more preferably not more than 20,000 from the viewpoint of improving dispersion stability of the polyester resin emulsion.

The weight-average molecular weight (Mw) of the polyester resin (a) may be measured by the method described in Examples below.

(Production of Polyester Resin Emulsion (A))

As the method of obtaining the polyester resin emulsion (A), there may be mentioned a method of adding the polyester resin (a) into an aqueous medium, followed by subjecting the resulting mixture to dispersion treatment using a disperser, etc., a method of gradually adding an aqueous medium to an organic solvent solution containing the polyester resin (a) to subject the resin to phase inversion emulsification, and the like. Among these methods, the dispersion treatment method is preferably used from the viewpoint of simplified operation thereof.

The dispersion treatment method preferably includes the step of heating the aqueous medium to a predetermined temperature while stirring and then adding the polyester resin (a) to the aqueous medium and stirring the resulting mixture, followed by cooling the mixture to room temperature. From the viewpoint of removing coarse particles of the polyester resin from the resulting emulsion, the aforementioned method may further include a filtration step.

The temperature used upon adding the polyester resin (a) to the aqueous medium is preferably not lower than 60°C and more preferably not lower than 70°C, and is also preferably not higher than 90°C and more preferably not higher than 85°C.

The average particle size of the polyester resin (a) contained in the form of an emulsion thereof is preferably not less than 10 nm, more preferably not less than 30 nm and even more preferably not less than 50 nm from the viewpoint of improving substrate-adhesion properties of the resulting ink, and is also preferably not more than 150 nm, more preferably not more than 130 nm, even more preferably not more than 100 nm, further even more preferably not more than 90 nm and still further even more preferably not more than 70 nm from the viewpoint of improving image sharpness and image uniformity of the resulting printed material.

The average particle size of the polyester resin (a) contained in the form of an emulsion thereof may be measured by the method described in Examples below.

The pH value (at 25°C) of the polyester resin emulsion (A) is preferably not less than 4.5 and more preferably not less than 5, and is also preferably not more than 6.5 and more preferably not more than 6, from the viewpoint of improving substrate-adhesion properties of the ink, and image sharpness and image uniformity of the resulting printed material. The pH value of the polyester resin emulsion (A) may be measured by the method described in Examples below.

In addition, the polyester resin emulsion (A) may be used alone or in the form of a mixture of any two or more kinds thereof.

<Solvent (B)>

The treating liquid of the present invention further contains a solvent (B) other than water from the viewpoint of improving substrate-adhesion properties of the ink, and image sharpness and image uniformity of the resulting printed material.

Examples of the solvent (B) include a polyhydric alcohol, a polyhydric alcohol ether, a monohydric alcohol, a ketone, and the like. Among these solvents, preferred is at least one solvent selected from the group consisting of a polyhydric alcohol and a polyhydric alcohol ether.

The boiling point of the solvent (B) is preferably not lower than 90°C, more preferably not lower than 130°C and even more preferably not lower than 150°C, and is also preferably not higher than 250°C, more preferably not higher than 230°C and even more preferably not higher than 200°C, from the viewpoint of improving substrate-adhesion properties of the ink, and image sharpness and image uniformity of the resulting printed material.

Examples of the polyhydric alcohol include 1,2-alkanediols such as ethylene glycol (boiling point (b.p.): 197°C), propylene glycol (b.p.: 188°C), 1,2-butanediol (b.p.: 193°C), 1,2-pentanediol (b.p.: 206°C), 1,2-hexanediol (b.p.: 223°C), etc., diethylene glycol (b.p.: 245°C), polyethylene glycol, dipropylene glycol (b.p.: 232°C), 1,3-propanediol (b.p.: 210°C), 1,3-butanediol (b.p.: 208°C), 1,4-butanediol (b.p.: 230°C), 3-methyl-1,3-butanediol (203°C), 1,5-pentanediol (b.p.: 242°C), 2-methyl-2,4-pentanediol (b.p.: 196°C), 1,2,6-hexanetriol (b.p.: 178°C), 1,2,4-butanetriol (b.p.:190°C), 1,2,3-butanetriol (b.p.:175°C), petriol (b.p.:216°C), and the like.

Examples of the polyhydric alcohol ether include an alkylene glycol monoalkyl ether, an alkylene glycol dialkyl ether and the like. Among these polyhydric alcohol ethers, from the viewpoint of improving substrate-adhesion properties of the ink, and image sharpness and image uniformity of the resulting printed material, preferred is the alkylene glycol monoalkyl ether. The number of carbon atoms in an alkyl group of the alkylene glycol monoalkyl ether is preferably not less than 1, and is also preferably not more than 6, more preferably not more than 4 and even more preferably not more than 2. The alkyl group of the alkylene glycol monoalkyl ether may be either linear to branched.

Specific examples of the alkylene glycol monoalkyl ether include ethylene glycol monoethyl ether (boiling point (b.p.): 136°C), ethylene glycol monoisopropyl ether (b.p.: 144°C), ethylene glycol monopropyl ether (b.p.: 151°C), ethylene glycol monobutyl ether (b.p.: 171°C), diethylene glycol monomethyl ether (b.p.: 194°C), diethylene glycol monoethyl ether (b.p.: 202°C), diethylene glycol monoisopropyl ether (b.p.: 207°C), diethylene glycol monoisobutyl ether (b.p.: 230°C), diethylene glycol monobutyl ether (b.p.: 230°C), triethylene glycol monomethyl ether (b.p.: 248°C), dipropylene glycol monomethyl ether (b.p.: 190°C), dipropylene glycol monobutyl ether (b.p.: 231°C), tripropylene glycol monomethyl ether (b.p.: 243°C), and the like.

The solubility parameter (hereinafter also referred to merely as an "SP value") of the solvent (B) is preferably not less than 15 $(MPa)^{1/2}$, more preferably not less than 16 $(MPa)^{1/2}$ and even more preferably not less than 17 $(MPa)^{1/2}$, and is also preferably not more than 27 $(MPa)^{1/2}$, more preferably not more than 24 $(MPa)^{1/2}$, even more preferably not more than 20 $(MPa)^{1/2}$ and further even more preferably not more than 18 $(MPa)^{1/2}$, from the viewpoint of improving substrate-adhesion properties of the ink, and image sharpness and image uniformity of the resulting printed material.

As the solubility parameter described in the present invention, there is used a Hansen SP value. The Hansen SP value used herein may be calculated from three kinds of energy parameters obtained by dividing an interaction energy acting between molecules of substances on the basis of chemical structures thereof. More specifically, the Hansen SP value used herein may be calculated according to the following equation:

$$\delta = (\delta_d{}^2 + \delta_p{}^2 + \delta_h{}^2)^{1/2}$$

wherein $\delta_d$ is a London dispersion force item, $\delta_p$ is a molecular polarization item, and $\delta_h$ is a hydrogen bonding item. The details of $\delta_d$, $\delta_p$ and $\delta_h$ of the respective water-soluble organic solvents are described more specifically in "HANSEN SOLUBILITY PARAMETERS", A User' Handbook, Second Edition.

In addition, if the SP value is not determined by the aforementioned method, there may also be used the value described in "Solubility Parameter Values" VII, pp. 675-714 of "Polymer Handbook, Fourth Edition", published in 1999 by John Wiley & Sons, Inc., etc.

The treating liquid of the present invention contains a solvent (b-1) having a solubility parameter of not less than 15 $(MPa)^{1/2}$ and not more than 27 $(MPa)^{1/2}$ (hereinafter also referred to merely as a "solvent (b-1)").

Examples of the solvent (b-1) include dialkylene glycol monoalkyl ethers such as dipropylene glycol monomethyl ether (SP value: 17.6 $(MPa)^{1/2}$ (in the following respective solvents, the omitted unit of the SP value thereof is "$(MPa)^{1/2}$"), diethylene glycol monoethyl ether (SP value: 22), diethylene glycol monobutyl ether (SP value: 20), etc.; alkylene glycol monoalkyl ethers such as ethylene glycol monomethyl ether (SP value: 23.3), ethylene glycol monoethyl ether (SP value: 21.5), ethylene glycol monobutyl ether (SP value: 19.4), propylene glycol monomethyl ether (SP value: 20.7), etc.; linear or branched aliphatic alcohols such as ethyl alcohol (SP value: 26.0), isopropyl alcohol (SP value: 23.5), propyl alcohol (SP value: 24.3), etc.; ketones such as acetone (SP value: 20.3), etc.; and the like. Among these solvents, preferred are dialkylene glycol monoalkyl ethers, more preferred is at least one solvent selected from the group consisting of dipropylene glycol monomethyl ether, diethylene glycol monoethyl ether and diethylene glycol monobutyl ether, and even more preferred is dipropylene glycol monomethyl ether.

The content of the solvent (b-1) in the solvent (B) is preferably not less than 70% by mass, more preferably not less than 80% by mass and even more preferably not less than 90% by mass, and is also preferably not more than 100% by mass, and furthermore preferably 100% by mass.

<Neutralizing Agent (C)>

The treating liquid of the present invention preferably further contains a neutralizing agent (C) from the viewpoint of well controlling a pH value of the resulting treating liquid as well as from the viewpoint of improving substrate-adhesion properties of the ink, and image sharpness and image uniformity of the resulting printed material.

As the neutralizing agent (C), there may be mentioned hydroxides of alkali metals, ammonia, organic amine compounds, etc. Examples of the hydroxides of alkali metals include lithium hydroxide, sodium hydroxide, potassium hydroxide and cesium hydroxide. Among these hydroxides of alkali metals, preferred is sodium hydroxide. As the organic amine compounds, a water-soluble amine compound is preferably used. Among these neutralizing agents (C), preferred are the organic amine compounds, and more preferred is the water-soluble amine compound.

The "water-soluble" of the aforementioned water-soluble amine compound as used herein means that the solubility in water of the water-soluble amine compound as measured by dissolving the compound in 100 g of water at 25°C (hereinafter also referred to merely as "water solubility") is not less than 5 g (5 g/100 g$H_2$O). For example, the water solubility of triethylamine as measured at 20°C is 17 g/100 g$H_2$O, the water solubility of N-dimethylaminoethanol as measured at 25°C is 95.4 g/100 g$H_2$O, and the water solubility of N-methyl diethanolamine as measured at 25°C is 100 g/100 g$H_2$O,.

The number of carbon atoms in the water-soluble amine compound is preferably not less than 2 and more preferably not less than 3 from the viewpoint of improving substrate-adhesion properties of the ink, and image sharpness and image uniformity of the resulting printed material, and is also preferably not more than 8 and more preferably not more than 6 from the same viewpoint as described above.

Examples of the neutralizing agent (C) include alkylamines, alkanolamines and the like.

Specific examples of the neutralizing agent (C) include trialkylamines having not less than 3 and not more than 8 carbon atoms, such as trimethylamine, triethylamine, etc.; alkanolamines having not less than 2 and not more than 8 carbon atoms which are miscible with water, such as monoethanolamine, monopropanolamine, monobutanolamine, N-methylaminoethanol, N-methylaminopropanol, N,N-dimethylaminoethanol, N,N-dimethylaminopropanol, diethanolamine, N-methyldiethanolamine, dipropanolamine, N-methyldipropanolamine, triethanolamine, etc.; and the like. Among these neutralizing agents (C), from the viewpoint of improving substrate-adhesion properties of the ink, and image sharpness and image uniformity of the resulting printed material, preferred is an alkanolamine having not less than 2 and not more than 8 carbon atoms, more preferred is at least one alkanolamine selected from the group consisting of a primary alkanolamine, a secondary alkanolamine and a tertiary alkanolamine which have not less than 2 and not more than 8 carbon atoms, even more preferred is the tertiary alkanolamine having not less than 2 and not more than 8 carbon atoms, and further even more preferred is N-methyldiethanolamine. These neutralizing agents (C) may be used alone or in the form of a mixture of any two or more thereof.

(Composition of Treating Liquid Compounded)

The content of the polyester resin (a) in the treating liquid is not less than 15% by mass and further even more preferably not less than 17% by mass, and is also preferably not more than 30% by mass, more preferably not more than 25% by mass and even more preferably not more than 23% by mass, from the viewpoint of improving substrate-adhesion properties of the ink, and image sharpness and image uniformity of the resulting printed material.

The content of the solvent (B) in the treating liquid is not less than 1% by mass and even more preferably not less than 3% by mass, and is also not more than 10% by mass and further even more preferably not more than 7% by mass, from the viewpoint of improving substrate-adhesion properties of the ink, and image sharpness and image uniformity of the resulting printed material.

The content of the solvent (b-1) in the treating liquid is not less than 1% by mass and even more preferably not less than 3% by mass, and is also not more than 10% by mass and further even more preferably not more than 7% by mass, from the viewpoint of improving substrate-adhesion properties of the ink, and image sharpness and image uniformity of the resulting printed material.

The content of the neutralizing agent (C) in the treating liquid is preferably not less than 0.1% by mass, more preferably not less than 0.5% by mass and even more preferably not less than 0.7% by mass, and is also preferably not more than 5% by mass, more preferably not more than 3% by mass, even more preferably not more than 2% by mass and further even more preferably not more than 1.5% by mass, from the viewpoint of improving substrate-adhesion properties of the ink, and image sharpness and image uniformity of the resulting printed material.

The content of water in the treating liquid is preferably not less than 50% by mass, more preferably not less than 60% by mass and even more preferably not less than 70% by mass from the viewpoint of improving substrate-adhesion properties of the ink, and image sharpness and image uniformity of the resulting printed material, and is also preferably not more than 90% by mass, more preferably not more than 85% by mass and even more preferably not more than 80% by mass, from the viewpoint of improving drying properties of the treating liquid.

(Other Components)

The treating liquid of the present invention may also contain various ordinary additives that may be usually compounded in treating liquids for substrates used in an image-forming method that is conducted by an ink-jet printing method, such as a dispersant, a surfactant, a viscosity controller, a defoaming agent, an antiseptic agent, a mildew-proof agent, a rust preventive, etc.

The treating liquid of the present invention preferably contains no colorant such as a pigment, a dye, etc. If the treating liquid contains substantially no colorant, the hues of respective inks are not adversely affected when they are overprinted on each other.

The pH value of the treating liquid of the present invention as measured at 25°C is preferably not less than 5, more preferably not less than 6, even more preferably not less than 6.5, further even more preferably not less than 7 and still further even more preferably not less than 7.5, and is also preferably not more than 10, more preferably not more than 9.5, even more preferably not more than 9 and further even more preferably not more than 8.5, from the viewpoint of improving substrate-adhesion properties of the ink, and image sharpness and image uniformity of the resulting printed material. In the case where the pH value of the treating liquid is not less than 5, the acid group contained in the polyester resin (a) can sufficiently exhibit its function, so that even when printed on a low-liquid absorbing substrate, the ink can be improved in adhesion properties to the low-liquid absorbing substrate, and the resulting printed material can be improved in image sharpness and image uniformity.

The viscosity of the treating liquid of the present invention as measured at 20°C is preferably not less than 1 mPa•s, more preferably not less than 2 mPa•s and even more preferably not less than 3 mPa•s, and is also preferably not more than 50 mPa•s, more preferably not more than 30 mPa•s, even more preferably not more than 20 mPa•s and further even more preferably not more than 10 mPa•s, from the viewpoint of improving substrate-adhesion properties of the ink, and image sharpness and image uniformity of the resulting printed material.

The static surface tension of the treating liquid of the present invention as measured at 20°C is preferably not less than 20 mN/m, more preferably not less than 30 mN/m and even more preferably not less than 40 mN/m, and is also preferably not more than 60 mN/m, more preferably not more than 55 mN/m and even more preferably not more than 53 mN/m, from the viewpoint of improving substrate-adhesion properties of the ink, and image sharpness and image uniformity of the resulting printed material.

The pH value, viscosity and static surface tension of the treating liquid may be measured by the respective methods described in Examples below.

(Preparation of Treating Liquid)

The polyester resin emulsion (A) may be directly used as the treating liquid of the present invention. However, it is preferred that the polyester resin emulsion (A) is appropriately mixed with the solvent (B), if required, and further mixed with the neutralizing agent (C), if required, and the thus obtained mixture is used as the treating liquid of the present invention. More specifically, from the viewpoint of suppressing flocculation of the polyester resin, the treating liquid of the present invention is preferably prepared by the method in which a mixed solution containing water, if required together with the solvent (B) and further if required together with the neutralizing agent (C), is preliminarily prepared, and then the polyester resin emulsion (A) is added to the mixed solution. The pH value of the treating liquid may be controlled by the neutralizing agent (C).

[Ink Set]

The treating liquid of the present invention is preferably used as a component of an ink set that includes the treating liquid and a water-based ink containing at least a colorant (I) and water. The aforementioned water-based ink preferably contains at least one color ink selected from the group consisting of an achromatic ink, a chromatic ink and the like. The details of the water-based ink are described hereinlater.

The aforementioned treating liquid is capable of not only allowing an ink to exhibit excellent adhesion properties to a low-liquid absorbing substrate, but also providing a printed material that is excellent in image sharpness and image uniformity, even when printed on the low-liquid absorbing substrate, and therefore can be used as a component of an ink set using the treating liquid in combination with two or more water-based inks having different colors. In addition, since the treating liquid is capable of not only allowing an ink to exhibit excellent adhesion properties to a low-liquid absorbing substrate, but also providing a printed material that is excellent in image sharpness and image uniformity, it is possible to obtain a good printed material that is free of roller transfer contamination or intercolor bleeding owing to overprinting of inks. For this reason, the treating liquid can be used as a component of an ink set for flexographic printing, gravure printing or ink-jet printing. Among them, in view of excellent adhesion properties of the ink to the substrate as well as excellent image sharpness and image uniformity of the resulting printed material, the treating liquid is preferably used as a component of an ink set for ink-jet printing.

[Image-Forming Method]

The image-forming method of the present invention includes the following step 1 and step 2:

Step 1: applying the aforementioned treating liquid onto a surface of a low-liquid absorbing substrate and drying the treating liquid on the low-liquid absorbing substrate to obtain a surface-treated low-liquid absorbing substrate; and
Step 2: printing characters or images on a treated surface of the surface-treated low-liquid absorbing substrate obtained in the step 1 by an ink-jet printing method.

(Step 1)

The step 1 is the step of applying the aforementioned treating liquid onto a surface of a low-liquid absorbing substrate and drying the treating liquid on the low-liquid absorbing substrate to obtain a surface-treated low-liquid absorbing substrate.

Examples of the low-liquid absorbing substrate used in the present invention include a coated paper, a resin film and the like. From the viewpoint of allowing the ink to exhibit the effect of good substrate-adhesion properties thereof, the low-liquid absorbing substrate is preferably a resin film.

The thickness of the low-liquid absorbing substrate is not particularly limited. Although the low-liquid absorbing substrate may be in the form of a thin film having a thickness of less than 1 $\mu$m, the thickness of the low-liquid absorbing substrate is preferably not less than 1 $\mu$m, more preferably not less than 5 $\mu$m and even more preferably not less than 10 $\mu$m, and is also preferably not more than 100 $\mu$m, more preferably not more than 50 $\mu$m and even more preferably not more than 30 $\mu$m, from the viewpoint of suppressing deformation of the substrate and improving availability of the substrate.

The water absorption per a unit surface area of the low-liquid absorbing substrate as measured by contacting the low-liquid absorbing substrate with pure water for 100 milliseconds is preferably not less than 0 $g/m^2$ and not more than 6 $g/m^2$. From the viewpoint of allowing the ink to exhibit the effect of good substrate-adhesion properties thereof, the aforementioned water absorption of the low-liquid absorbing substrate is more preferably not less than 0 $g/m^2$ and not more than 4.5 $g/m^2$, and even more preferably not less than 0 $g/m^2$ and not more than 2.5 $g/m^2$.

Examples of commercially available products of the coated paper include a versatile glossy coated paper "OK Topcoat Plus" (basis weight: 104.7 $g/m^2$; water absorption as measured in a water contact time of 100 milliseconds (hereinafter defined in the same way): 4.9 g/m$^2$) available from Oji Paper Co., Ltd., a multi-color foam glossy coated paper (basis weight: 104.7 g/m$^2$; water absorption: 5.2 g/m$^2$) available from Oji Paper Co., Ltd., "UPM Finesse Gloss" (basis weight: 115 g/m$^2$; water absorption: 3.1 g/m$^2$) available from UPM, "UPM Finesse Matt" (basis weight: 115 g/m$^2$; water absorption: 4.4 g/m$^2$) available from UPM, "Terra Press Silk" (basis weight: 80 g/m$^2$; water absorption: 4.1 g/m$^2$) available from Stora Enso, and the like.

Examples of the resin film include a polyester film, a polyvinyl chloride film, a polypropylene film, a polyethylene film, a nylon film and the like. These resin films may be subjected to surface treatments such as corona treatments, etc., if required.

Examples of commercially available products of the resin film include "LUMIRROR T60" (polyethylene terephthalate; water absorption: 2.3 g/m$^2$) available from Toray Industries Inc., "FE2001" (corona-treated polyethylene terephthalate; water absorption: 0 g/m$^2$) available from Futamura Chemical Co., Ltd., "PVC80B P" (polyvinyl chloride; water absorption: 1.4 g/m$^2$) available from Lintec Corporation, "KINATH KEE 70CA" (polyethylene) available from Lintec Corporation, "YUPO SG90 PAT1" (polypropylene) available from Lintec Corporation, "BONYL RX" (nylon) available from Kohjin Film & Chemical Co., Ltd., and the like.

The method of applying the aforementioned treating liquid onto the low-liquid absorbing substrate is not particularly limited, and there may be used conventionally known applying methods such as a coating method, a dipping method, an ink-jet printing method, etc. Examples of the coating method and the dipping method include those methods using a roll coater, a gravure coater, a die coater, a curtain coater, a spray coater, a blade coater, a wire bar coater, a rod coater, an impregnation coater, a cast coater, an air knife coater, a reverse coater, a lip coater, a kiss coater, etc. The coating method does not need to take ejection properties, etc., of the treating liquid into consideration unlike the ink-jet printing method, and is therefore preferably used from the viewpoint of simply and uniformly applying the treating liquid onto the substrate.

In the step 1, after applying the aforementioned treating liquid onto the low-liquid absorbing substrate, the treating liquid on the low-liquid absorbing substrate is dried. The drying method is not particularly limited, and there may be used conventionally known drying methods such as natural air drying, hot air drying, etc.

The drying temperature in the step 1 is preferably not lower than 30°C, more preferably not lower than 40°C and even more preferably not lower than 50°C from the viewpoint of improving substrate-adhesion properties of the ink, and image sharpness and image uniformity of the resulting printed material, and is also preferably not higher than 200°C, more preferably not higher than 150°C, even more preferably not higher than 120°C and further even more preferably not higher than 90°C from the viewpoint of suppressing deformation of the substrate owing to heat applied thereto and saving energy consumed.

The drying time in the step 1 is preferably not less than 3 minutes and more preferably not less than 5 minutes from the viewpoint of improving substrate-adhesion properties of the ink, and image sharpness and image uniformity of the resulting printed material, and is also preferably not more than 30 minutes and more preferably not more than 15 minutes from the viewpoint of suppressing deformation of the substrate owing to heat applied thereto and saving energy consumed.

By conducting the step 1, there is obtained a surface-treated low-liquid absorbing substrate including a surface treatment layer formed of the treating liquid.

The amount of the treating liquid applied onto the low-liquid absorbing substrate in terms of a solid content thereof is preferably not less than 0.1 g/m$^2$, more preferably not less than 0.2 g/m$^2$ and even more preferably not less than 0.3 g/m$^2$, and is also preferably not more than 10 g/m$^2$, more preferably not more than 8 g/m$^2$, even more preferably not more than 5 g/m$^2$, further even more preferably not more than 3 g/m$^2$ and still further even more preferably not more than 1 g/m$^2$, from the viewpoint of improving substrate-adhesion properties of the ink, and image sharpness and image uniformity of the resulting printed material.

(Step 2)

The step 2 is the step of printing characters or images on a treated surface of the surface-treated low-liquid absorbing substrate obtained in the step 1 by an ink-jet printing method.

<Water-Based Ink>

In the image-forming method of the present invention, the ink used for printing characters or images by an ink-jet printing method is preferably in the form of a water-based ink (hereinafter also referred to merely as an "ink") and more preferably in the form of an ink containing at least a colorant (I) and water. In addition, the ink may also contain a polymer (II), an organic solvent (III), a surfactant (IV) and other components, if required. The term "water-based ink" as used in the present specification means such an ink in which water has a largest content among components of a medium contained in the ink.

The polymer (II) may be used as at least one of a pigment-dispersing polymer (II-1) for dispersing the pigment (hereinafter also referred to merely as a "pigment-dispersing polymer (II-1)") and a fixing aid polymer (II-2) for improving substrate-adhesion properties of the ink (hereinafter also referred to merely as a "fixing aid polymer (II-2)"). These polymers (II-1) and (II-2) may also be used in combination with each other.

(Colorant (I))

Examples of the colorant (I) include a pigment, a hydrophobic dye, a water-soluble dye (such as an acid dye, a reactive dye, a direct dye, etc.), and the like. Of these colorants, from the viewpoint of improving water resistance and weathering resistance of the resulting printed material, preferred is at least one colorant selected from the group consisting of a pigment and a hydrophobic dye, and more preferred is a pigment. The pigment may be either an inorganic pigment or an organic pigment. Examples of the inorganic pigment include carbon blacks, metal oxides and the like. The carbon blacks are preferably used as a pigment for black inks. Examples of the carbon blacks include furnace blacks, thermal lamp blacks, acetylene blacks, channel blacks and the like. In white inks, as the pigment, there may be used metal oxides such as titanium oxide, zinc oxide, silica, alumina, magnesium oxide , etc., and the like. Among these pigments for the white inks, preferred is titanium oxide.

Examples of the organic pigment include azo pigments, diazo pigments, phthalocyanine pigments, quinacridone pigments, isoindolinone pigments, dioxazine pigments, perylene pigments, perinone pigments, thioindigo pigments, anthraquinone pigments, quinophthalone pigments and the like. In chromatic inks, the organic pigments are preferably used. The hue of the organic pigments is not particularly limited, and there may be used any chromatic pigments such as a yellow pigment, a magenta pigment, a cyan pigment, a red pigment, a blue pigment, an orange pigment, a green pigment, etc.

The average particle size of the pigment used in the black inks and the respective chromatic inks is preferably not less than 60 nm and not more than 180 nm from the viewpoint of improving tinting power and dispersion stability of the resulting ink. The average particle size of the pigment in the white inks is preferably not less than 150 nm and not more than 400 nm form the viewpoint of improving hiding power (whiteness) of the resulting ink.

The pigment used in the present invention may be used in at least one pigment configuration selected from the group consisting of a self-dispersible pigment, and particles formed by dispersing the pigment with the polymer (II-1). Among these pigment configurations, from the viewpoint of improving dispersion stability of the pigment as well as from the viewpoint of improving substrate-adhesion properties of the ink, and image sharpness and image uniformity of the resulting printed material, the pigment is preferably used in the form of particles formed by dispersing the pigment with the polymer (II-1).

[Self-Dispersible Pigment]

In the present invention, the pigment may be used in the form of a self-dispersible pigment.

The self-dispersible pigment that can be used in the present invention means a pigment onto a surface of which at least one hydrophilic functional group (including an anionic hydrophilic group such as a carboxy group, a sulfonic acid group, etc., or a cationic hydrophilic group such as a quaternary ammonium group, etc.) is bonded either directly or through the other atom group such as an alkanediyl group having 1 to 12 carbon atoms, etc., to thereby render the pigment dispersible in an aqueous medium without using a surfactant or a resin. To convert the pigment into the self-dispersible pigment, for example, a necessary amount of the hydrophilic functional group may be chemically bonded to the surface of the pigment by an ordinary method. Specific examples of commercially available products of the self-dispersible pigment include "CAB-O-JET 200", "CAB-O-JET 300", "CAB-O-JET 352K", "CAB-O-JET 250A", "CAB-O-JET 260M", "CAB-O-JET 270Y", "CAB-O-JET 450A", "CAB-O-JET 465M", "CAB-O-JET 470Y" and "CAB-O-JET 480V" all available from Cabot Japan, K.K.; "BONJET CW-1", "BONJET CW-2", etc., all available from Orient Chemical Industries Co., Ltd.; "Aqua-Black 162", etc., all available from Tokai Carbon Co., Ltd.; and "SENSIJET BLACK SDP100", "SENSIJET BLACK SDP1000", "SENSIJET BLACK SDP2000", etc., all available from SENSIENT INDUSTRIAL COLORS. The self-dispersible pigment is preferably used in the form of a pigment water dispersion prepared by dispersing the self-dispersible pigment in water.

[Particles Formed by Dispersing Pigment with Polymer (II-1)]

In the present invention, the pigment may also be used in the form of the particles formed by dispersing the pigment with the polymer (II-1). Examples of the particles formed by dispersing the pigment with the polymer (II-1) include 1) particles formed by kneading the pigment and the polymer (II-1) with each other and then dispersing the resulting kneaded material in a medium such as water, etc.; 2) particles formed by stirring the pigment and the polymer (II-1) in a medium such as water, etc., to disperse the pigment in the medium such as water, etc.; 3) particles formed by mechanically dispersing a raw material of the polymer (II-1) and the pigment, polymerizing the raw material of the polymer (II-1) under the dispersed condition, and then dispersing the pigment in a medium such as water, etc., with the resulting polymer (II-1); and the like. The configuration of the particles formed by dispersing the pigment with the polymer (II-1) is not particularly limited. However, there is preferably used such a pigment-enclosed configuration in which the pigment is enclosed in the polymer, i.e., a configuration of polymer particles into which the pigment is incorporated (hereinafter also referred to merely as "pigment-containing polymer particles").

Moreover, from the viewpoint of improving storage stability of the resulting ink, the polymer (II-1) in the particles formed by dispersing the pigment with the polymer (II-1) may be crosslinked with a crosslinking agent. Examples of the crosslinking agent include compounds containing two or more functional groups that are capable of reacting with functional groups contained in the polymer (II-1). For example, in the case where the polymer contains a carboxy group, as the crosslinking agent, there is preferably used a polyglycidyl ether compound of a polyhydric alcohol.

(Polymer (II))

The ink used in the present invention preferably further contains the aforementioned polymer (II) from the viewpoint of improving dispersion stability of the pigment as well as from the viewpoint of improving substrate-adhesion properties of the ink, and image sharpness and image uniformity of the resulting printed material. As the polymer (II), there may be mentioned condensation-based resins such as polyurethanes, polyesters, etc.; and vinyl-based polymers such as acrylic resins, styrene-based resins, styrene-acrylic resins, butadiene-based resins, styrene-butadiene-based resins, vinyl chloride-based resins, vinyl acetate-based resins, acrylic-silicone-based resins, etc. Among these polymers, preferred are vinyl-based polymers.

The weight-average molecular weight of the polymer (II) is preferably not less than 10,000, more preferably not less than 20,000, even more preferably not less than 30,000 and further even more preferably not less than 40,000, and is also preferably not more than 2,500,000 and more preferably not more than 1,000,000, from the viewpoint of improving dispersion stability of the pigment as well as from the viewpoint of improving substrate-adhesion properties of the resulting ink.

[Pigment-Dispersing Polymer (II-1)]

As the pigment-dispersing polymer (II-1), there may be mentioned condensation-based resins such as polyesters, polyurethanes, etc.; vinyl-based polymers; and the like. Among these polymers, from the viewpoint of improving dispersion stability of the pigment, preferred are vinyl-based polymers that are obtained by subjecting a vinyl monomer (such as a vinyl compound, a vinylidene compound and a vinylene compound) to addition polymerization.

The vinyl-based polymer preferably contains at least one constitutional unit selected from the group consisting of a constitutional unit derived from an ionic monomer, a constitutional unit derived from a hydrophobic monomer and a constitutional unit derived from a hydrophilic nonionic monomer. For example, as the monomers constituting the vinyl-based polymer, there may be mentioned a combination of the ionic monomer and the hydrophobic monomer, and a combination of the ionic monomer, the hydrophobic monomer and the hydrophilic nonionic monomer.

Examples of the ionic monomer include carboxylic acid monomers such as acrylic acid, methacrylic acid, etc.; and the like. As the hydrophobic monomer, there may be mentioned aromatic group-containing monomers having a molecular weight of less than 500, such as styrene-based monomers, aromatic group-containing (meth)acrylates, etc.; (meth)acrylates containing a hydrocarbon group derived from an aliphatic alcohol having not less than 1 and not more than 22 carbon atoms; styrene-based macromers; and the like. As the hydrophilic nonionic monomer, there may be mentioned hydroxyalkyl (meth)acrylates; polyalkylene glycol (meth)acrylates, (meth)acrylates containing a polyalkylene glycol segment such as an alkoxy polyalkylene glycol (in which an average molar number of addition of oxyalkylene groups is preferably not less than 2 and not more than 30), etc.; and the like.

Among these pigment-dispersing polymers (II-1), preferred are acrylic polymers containing a constitutional unit derived from acrylic acid or methacrylic acid.

As the pigment-dispersing polymer (II-1), there may be used either an appropriately synthesized product or a commercially available product.

The weight-average molecular weight of the pigment-dispersing polymer (II-1) is preferably not less than 20,000, more preferably not less than 30,000 and even more preferably not less than 40,000, and is also preferably not more than 500,000, more preferably not more than 300,000 and even more preferably not more than 200,000, from the viewpoint of improving dispersion stability of the pigment.

Specific examples of commercially available products of the vinyl-based polymer include polyacrylic acids such as "ARON AC-10SL" available from Toagosei Co., Ltd., etc.; styrene-acrylic resins such as "JONCRYL 67", "JONCRYL 611", "JONCRYL 678", "JONCRYL 680", "JONCRYL 690" and "JONCRYL 819" all available from BASF Japan, Ltd., etc.; and the like.

[Fixing Aid Polymer (II-2)]

The fixing aid polymer (II-2) is preferably used in the form of pigment-free polymer particles. As the component constituting the pigment-free polymer particles, there may be mentioned condensation-based resins such as polyurethanes, polyesters, etc.; and vinyl-based polymers such as acrylic resins, styrene-based resins, styrene-acrylic resins, butadiene-based resins, styrene-butadiene-based resins, vinyl chloride-based resins, vinyl acetate-based resins, acrylic-silicone-based resins, etc. Among these fixing aid polymers, from the viewpoint of promoting drying of the ink on a printing substrate as well as from the viewpoint of improving substrate-adhesion properties of the ink, and image sharpness and image uniformity of the resulting printed material, preferred are acrylic resins.

In addition, from the viewpoint of enhancing productivity of the ink, the fixing aid polymer (II-2) is preferably used in the form of a dispersion containing the pigment-free polymer particles, i.e., particles of the fixing aid polymer (II-2), which is prepared by dispersing the particles in an aqueous medium. As the fixing aid polymer (II-2), there may be used either an appropriately synthetized product or a commercially available product.

The fixing aid polymer (II-2) may be produced by copolymerizing a mixture of monomers by conventionally known polymerization methods. For example, as the polymerization methods, preferred is an emulsion polymerization method, a suspension polymerization method or the like, and more preferred is the emulsion polymerization method.

Examples of the commercially available products of the fixing aid polymer (II-2) include acrylic resins such as "Neocryl A1127" (anionic self-crosslinkable water-based acrylic resin) available from DSM NeoResins, Inc., "JONCRYL 390" available from BASF Japan, Ltd., etc.; urethane resins such as "WBR-2018" and "WBR-2000U" both available from Taisei Fine Chemical Co., Ltd., etc.; styrene-butadiene resins such as "SR-100" and "SR-102" both available from Nippon A & L Inc., etc.; styrene-acrylic resins such as "JONCRYL 7100", "JONCRYL 7600", "JONCRYL 537J", "JONCRYL PDX-7164", "JONCRYL 538J" and "JONCRYL 780" all available from BASF Japan, Ltd., etc.; vinyl chloride-based resins such as "VINYBLAN 700" and "VINYBLAN 701" both available from Nissin Chemical Industry Co., Ltd., etc.; and the like. The dispersion of particles of the fixing aid polymer (II-2) serves for forming a film of the ink on a printing substrate to thereby improve fixing properties of the ink.

The weight-average molecular weight of the fixing aid polymer (II-2) is preferably not less than 10,000, more preferably not less than 20,000 and even more preferably not less than 50,000, and is also preferably not more than 2,500,000 and more preferably not more than 1,000,000, from the viewpoint of improving substrate-adhesion properties of the ink, and image sharpness and image uniformity of the resulting printed material.

The average particle size of particles of the fixing aid polymer (II-2) in the dispersion or ink containing the particles of the fixing aid polymer (II-2) is preferably not less than 10 nm, more preferably not less than 30 nm and even more preferably not less than 50 nm, and is also preferably not more than 300 nm, more preferably not more than 200 nm, even more preferably not more than 150 nm and further even more preferably not more than 130 nm, from the viewpoint of improving substrate-adhesion properties of the ink, and image sharpness and image uniformity of the resulting printed material.

(Organic Solvent (III))

As the organic solvent (III), those organic solvents having a boiling point of not lower than 90°C and lower than 250°C can be used from the viewpoint of improving substrate-adhesion properties of the ink, and image sharpness and image uniformity of the resulting printed material as well as from the viewpoint of improving storage stability and continuous ejection properties of the resulting ink and obtaining a good printed material that is free of color migration or deformation of the printing substrate. From the same viewpoint as described above, the boiling point of the organic solvent (III) is preferably not lower than 130°C, more preferably not lower than 140°C and even more preferably not lower than 150°C, and is also preferably not higher than 245°C, more preferably not higher than 240°C and even more preferably not higher than 235°C.

Examples of the organic solvent (III) include a polyhydric alcohol (III-1), a glycol ether (III-2) and the like.

These organic solvents (III) may be used alone or in combination of any two or more thereof.

Examples of the polyhydric alcohol (III-1) include ethylene glycol (boiling point (b.p.): 197°C), propylene glycol (b.p.: 188°C), 1,2-alkanediols such as 1,2-butanediol (b.p.: 193°C), 1,2-pentanediol (b.p.: 206°C), 1,2-hexanediol (b.p.: 223°C), etc., diethylene glycol (b.p.: 245°C), polyethylene glycol, dipropylene glycol (b.p.: 232°C), 1,3-propanediol (b.p.: 210°C), 1,3-butanediol (b.p.: 208°C), 1,4-butanediol (b.p.: 230°C), 3-methyl-1,3-butanediol (203°C), 1,5-pentanediol (b.p.: 242°C), 2-methyl-2,4-pentanediol (b.p.: 196°C), 1,2,6-hexanetriol (b.p.: 178°C), 1,2,4-butanetriol (b.p.:190°C), 1,2,3-butanetriol (b.p.:175°C), petriol (b.p.:216°C), and the like.

Among these polyhydric alcohols (III-1), from the viewpoint of improving substrate-adhesion properties of the ink, and image sharpness and image uniformity of the resulting printed material as well as from the viewpoint of improving storage stability and continuous ejection properties of the resulting ink and obtaining a good printed material that is free of color migration or deformation of a printing substrate, preferred is at least one compound selected from the group consisting of alkanediols having not less than 2 and not more than 6 carbon atoms, such as propylene glycol, diethylene glycol, 1,2-hexanediol, etc., and polypropylene glycols having a molecular weight of not less than 500 and not more than 1000, and more preferred is at least one compound selected from the group consisting of 1,2-alkanediols having not less than 3 and not more than 4 carbon atoms, such as propylene glycol, diethylene glycol, etc., and the aforementioned polypropylene glycols.

Specific examples of the glycol ether (III-2) include alkylene glycol monoalkyl ethers, alkylene glycol dialkyl ethers and the like. Among these glycol ethers, from the viewpoint of improving substrate-adhesion properties of the ink, and image sharpness and image uniformity of the resulting printed material as well as from the viewpoint of improving storage stability and continuous ejection properties of the resulting ink and obtaining a good printed material that is free of color migration or deformation of a printing substrate, preferred are alkylene glycol monoalkyl ethers. The number of carbon atoms in an alkyl group of the alkylene glycol monoalkyl ethers is preferably not less than 1, more preferably not less than 2 and even more preferably not less than 3, and is also preferably not more than 6 and more preferably not more than 4. The alkyl group of the alkylene glycol monoalkyl ethers may be in the form of either a straight chain or a branched chain.

Specific examples of the alkylene glycol monoalkyl ethers include ethylene glycol monoethyl ether (b.p.: 136°C), ethylene glycol monoisopropyl ether (b.p.: 144°C), ethylene glycol monopropyl ether (b.p.: 151°C), ethylene glycol monobutyl ether (b.p.: 171°C), diethylene glycol monomethyl ether (b.p.: 194°C), diethylene glycol monoethyl ether (b.p.: 202°C), diethylene glycol monoisopropyl ether (b.p.: 207°C), diethylene glycol monoisobutyl ether (b.p.: 230°C), diethylene glycol monobutyl ether (b.p.: 230°C), triethylene glycol monomethyl ether (b.p.: 248°C), dipropylene glycol monobutyl ether (b.p.: 231°C), dipropylene glycol monomethyl ether (b.p.: 189°C), tripropylene glycol monomethyl ether (b.p.: 243°C), and the like.

Of these glycol ethers (III-2), preferred is at least one compound selected from the group consisting of ethylene glycol monoisopropyl ether, ethylene glycol monopropyl ether, diethylene glycol monomethyl ether, diethylene glycol monoisopropyl ether, diethylene glycol monoisobutyl ether and diethylene glycol monobutyl ether, and more preferred is at least one compound selected from the group consisting of ethylene glycol monoisopropyl ether, diethylene glycol monoisopropyl ether and diethylene glycol monoisobutyl ether.

(Other Organic Solvents)

In the present invention, the water-based ink may also contain, in addition to the aforementioned organic solvent (III), those organic solvents that may be usually compounded in the water-based ink, such as the other alcohols, alkyl ethers and glycol ethers of the other alcohols, nitrogen-containing heterocyclic compounds such as N-methyl-2-pyrrolidone, etc., amides, amines, sulfur-containing compounds and the like.

For example, organic solvents having a boiling point of not lower than 250°C, such as 1,6-hexanediol (b.p.: 250°C), triethylene glycol (b.p.: 285°C), tripropylene glycol (b.p.: 273°C), polypropylene glycol (b.p.: not lower than 250°C), glycerin (b.p.: 290°C), etc., may be used in combination with the aforementioned compounds having a boiling point of lower than 250°C.

(Surfactant (IV))

The water-based ink used in the present invention preferably contains a surfactant (IV) from the viewpoint of suppressing increase in viscosity of the resulting ink, and improving substrate-adhesion properties of the ink, and image sharpness and image uniformity of the resulting printed material as well as from the viewpoint of improving continuous ejection properties of the resulting ink and obtaining a good printed material that is free of color migration or deformation of a printing substrate. As the surfactant (IV), there are preferably used those surfactants including a silicone-based surfactant (IV-1).

The silicone-based surfactant (IV-1) is not particularly limited, and any suitable silicone-based surfactants may be appropriately selected and used according to the aimed objects and applications of the water-based ink. As the silicone-based surfactant (IV-1), from the viewpoint of suppressing increase in viscosity of the resulting ink, and improving substrate-adhesion properties of the ink, and image sharpness and image uniformity of the resulting printed material as well as from the viewpoint of improving continuous ejection properties of the resulting ink and obtaining a good printed material that is free of color migration or deformation of a printing substrate, a polyether-modified silicone-based surfactant is preferably used.

(Polyether-Modified Silicone-Based Surfactant)

The polyether-modified silicone-based surfactant is capable of suppressing increase in viscosity of the resulting ink, and improving substrate-adhesion properties of the ink, and image sharpness and image uniformity of the resulting printed material, and is also capable of improving continuous ejection properties of the resulting ink and suppressing occurrence of color bleeding between the inks. Therefore, it is considered that the polyether-modified silicone-based surfactant contributes to production of a good printed material that is free of color migration.

The polyether-modified silicone-based surfactant has such a structure that a hydrocarbon group bonded to a side chain and/or a terminal end of a silicone oil is substituted with a polyether group. Examples of the suitable polyether group of the polyether-modified silicone-based surfactant include a polyethyleneoxy group, a polypropyleneoxy group and a polyalkyleneoxy group formed by addition-bonding an ethyleneoxy group (EO) and a propyleneoxy group (a trimethyleneoxy group or a propane-1,2-diyloxy group; PO) to each other in a block form or a random form. More specifically, as the polyether-modified silicone-based surfactant, there may be used a compound formed by grafting a polyether group to a main chain of a silicone, a compound formed by bonding a silicone and a polyether group to each other in a block form, and the like.

The HLB value of the polyether-modified silicone-based surfactant is preferably not less than 3.0, more preferably not less than 4.0 and even more preferably not less than 4.5 from the viewpoint of improving solubility of the polyether-modified silicone-based surfactant in the water-based ink. The "HLB" value as used herein means the value indicating an affinity of the surfactant to water and an oil, and can be determined according to the following formula by a Griffin method. Meanwhile, as the "hydrophilic group contained in surfactant" shown in the following formula, there may be mentioned, for example, a hydroxy group and an ethyleneoxy group.

$$\text{HLB} = 20 \times [(\text{molecular weight of hydrophilic group contained in surfactant})/(\text{molecular weight of surfactant})]$$

Specific examples of the polyether-modified silicone-based surfactant include "KF" series products available from Shin-Etsu Chemical Co., Ltd., "SILFACE SAG" available from Nissin Chemical Industry Co., Ltd., "BYK" series products available from BYK Chemie Japan K.K., and the like.

(Other Surfactants)

In the present invention, as the surfactant (IV), surfactants other than the polyether-modified silicone-based surfactant may be used in combination therewith. Among the surfactants other than the polyether-modified silicone-based surfactant, a nonionic surfactant is preferably used from the viewpoint of improving applicability of the resulting ink.

Examples of the nonionic surfactant include (1) alkyl ethers, alkenyl ethers, alkynyl ethers or aryl ethers of polyoxyalkylenes which are produced by adding ethyleneoxide, propyleneoxide or butyleneoxide (these compounds are hereinafter collectively referred to merely as an "alkyleneoxide") to a saturated or unsaturated, linear or branched higher alcohol having not less than 8 and not more than 22 carbon atoms, a polyhydric alcohol or an aromatic alcohol, (2) esters of a higher alcohol containing a saturated or unsaturated, linear or branched hydrocarbon group having not less than 8 and not more than 22 carbon atoms and a polyvalent fatty acid, (3) polyoxyalkylene aliphatic amines containing a linear or branched alkyl group or alkenyl group having 8 to 20 carbon atoms, (4) ester compounds of a higher fatty acid having not less than 8 and not more than 22 carbon atoms and a polyhydric alcohol, or compounds produced by adding an alkyleneoxide to the ester compounds, and the like.

Examples of commercially available products of the nonionic surfactant include "SURFYNOL" series products available from Nissin Chemical Industry Co., Ltd., and Air Products & Chemicals, Inc., "ACETYLENOL" series products available from Kawaken Fine Chemicals Co., Ltd., "EMULGEN 120" (polyoxyethylene lauryl ether) available from Kao Corporation, and the like.

The contents of the respective components in the water-based ink used in the present invention as well as various properties of the water-based ink are as follows.

(Content of Colorant (I))

The content of the colorant (I) in the black or chromatic water-based ink is preferably not less than 2% by mass, more preferably not less than 4% by mass and even more preferably not less than 6% by mass from the viewpoint of enhancing optical density of the resulting printed characters or images. Also, the content of the colorant (I) in the black or chromatic water-based ink is preferably not more than 30% by mass, more preferably not more than 20% by mass, even more preferably not more than 15% by mass and further even more preferably not more than 10% by mass from the viewpoint of reducing the viscosity of the water-based ink upon volatilization of the solvent therefrom, and improving substrate-adhesion properties of the ink, and image sharpness and image uniformity of the resulting printed material as well as from the viewpoint of improving continuous ejection properties of the resulting ink and obtaining a good printed material that is free of color migration or deformation of a printing substrate.

The content of the colorant (I) in the white water-based ink is preferably not less than 4% by mass, more preferably not less than 6% by mass and even more preferably not less than 8% by mass from the viewpoint of improving hiding power of the ink, and is also preferably not more than 40% by mass, more preferably not more than 30% by mass, even more preferably not more than 20% by mass and further even more preferably not more than 15% by mass from the viewpoint of improving image uniformity of the resulting printed material.

(Content of Polymer (II))

The content of the polymer (II) in the water-based ink is preferably not less than 1% by mass, more preferably not less than 2% by mass and even more preferably not less than 3% by mass, and is also preferably not more than 20% by mass, more preferably not more than 13% by mass and even more preferably not more than 8% by mass, from the viewpoint of improving dispersion stability of the pigment as well as from the viewpoint of improving substrate-adhesion properties of the ink, and image sharpness and image uniformity of the resulting printed material. The content of the polymer (II) means a total content of the pigment-dispersing polymer (II-1) and the fixing aid polymer (II-2).

In addition, in the case where the pigment-dispersing polymer (II-1) is used as the polymer (II), the content of the pigment-dispersing polymer (II-1) in the water-based ink is preferably not less than 0.01% by mass, more preferably not less than 0.05% by mass and even more preferably not less than 0.1% by mass, and is also preferably not more than 10% by mass, more preferably not more than 7% by mass and even more preferably not more than 5% by mass, from the viewpoint of improving dispersion stability of the pigment as well as from the viewpoint of improving substrate-adhesion properties of the ink, and image sharpness and image uniformity of the resulting printed material.

Also, in the case where the fixing aid polymer (II-2) is used as the polymer (II), the content of the fixing aid polymer (II-2) in the water-based ink is preferably not less than 0.9% by mass, more preferably not less than 1.0% by mass and even more preferably not less than 1.2% by mass, and is also preferably not more than 10% by mass, more preferably not more than 6% by mass and even more preferably not more than 3% by mass, from the viewpoint of improving substrate-adhesion properties of the ink, and image sharpness and image uniformity of the resulting printed material.

(Content of Organic Solvent (III))

The content of the organic solvent (III) in the water-based ink is preferably not less than 15% by mass, more preferably not less than 20% by mass and even more preferably not less than 25% by mass, and is also preferably not more than 45% by mass, more preferably not more than 40% by mass and even more preferably not more than 35% by mass, from the viewpoint of improving substrate-adhesion properties of the ink, and image sharpness and image uniformity of the resulting printed material as well as from the viewpoint of improving storage stability and continuous ejection properties of the resulting ink and obtaining a good printed material that is free of color migration or deformation of a printing substrate.

The content of the polyhydric alcohol (III-1) in the water-based ink is preferably not less than 10% by mass, more preferably not less than 15% by mass and even more preferably not less than 20% by mass, and is also preferably not more than 45% by mass, more preferably not more than 40% by mass and even more preferably not more than 35% by mass, from the viewpoint of improving substrate-adhesion properties of the ink, and image sharpness and image uniformity of the resulting printed material as well as from the viewpoint of improving storage stability and continuous ejection properties of the resulting ink and obtaining a good printed material that is free of color migration or deformation of a printing substrate.

The content of the glycol ether (III-2) in the water-based ink is preferably not less than 1% by mass, more preferably not less than 2% by mass and even more preferably not less than 3% by mass, and is also preferably not more than 15% by mass, more preferably not more than 12% by mass and even more preferably not more than 8% by mass, from the viewpoint of improving substrate-adhesion properties of the ink, and image sharpness and image uniformity of the resulting printed material as well as from the viewpoint of improving storage stability and continuous ejection properties of the resulting ink and obtaining a good printed material that is free of color migration or deformation of a printing substrate.

The content of a high-boiling point organic solvent having a boiling point of not lower than 250°C in the water-based ink used in the present invention is preferably not more than 5% by mass, more preferably not more than 4% by mass, even more preferably not more than 3% by mass and further even more preferably not more than 1% by mass from the viewpoint of imparting adequate drying properties to the water-based ink, and improving substrate-adhesion properties of the ink, and image sharpness and image uniformity of the resulting printed material as well as from the viewpoint of preventing occurrence of color migration.

(Content of Surfactant (IV))

The total content of the surfactant (IV) in the water-based ink is preferably not less than 0.05% by mass, more preferably not less than 0.1% by mass and even more preferably not less than 0.2% by mass, and is also preferably not more than 3.0% by mass, more preferably not more than 2.0% by mass and even more preferably not more than 1.0% by mass, from the viewpoint of suppressing increase in viscosity of the resulting ink and improving substrate-adhesion properties of the ink, and image sharpness and image uniformity of the resulting printed material as well as from the viewpoint of improving continuous ejection properties of the resulting ink and obtaining a good printed material that is free of color migration or deformation of a printing substrate.

(Content of Water)

The content of water in the water-based ink is preferably not less than 35% by mass, more preferably not less than 40% by mass, even more preferably not less than 45% by mass and further even more preferably not less than 50% by mass, and is also preferably not more than 75% by mass, more preferably not more than 70% by mass and even more preferably not more than 65% by mass, from the viewpoint of improving substrate-adhesion properties of the ink, and image sharpness and image uniformity of the resulting printed material as well as from the viewpoint of improving continuous ejection properties of the resulting ink and obtaining a good printed material that is free of color migration or deformation of a printing substrate.

(Other Components)

The water-based ink used in the present invention may also contain, in addition to the aforementioned components, various additives that may be usually used in water-based inks, such as a humectant, a wetting agent, a penetrant, a defoaming agent, an antiseptic agent, a mildew-proof agent, a rust preventive and the like.

(Properties of Water-Based Ink)

The average particle size of the particles contained in the water-based ink in the case where the water-based ink is a black ink or chromatic ink is preferably not less than 40 nm, more preferably not less than 60 nm and even more preferably not less than 80 nm, and is also preferably not more than 250 nm, more preferably not more than 220 nm, even more preferably not more than 200 nm and further even more preferably not more than 180 nm, from the viewpoint of improving substrate-adhesion properties of the ink, and image sharpness and image uniformity of the resulting printed material.

The average particle size of the particles contained in the water-based ink in the case where the water-based ink is a white ink is preferably not less than 100 nm, more preferably not less than 150 nm and even more preferably not less than 200 nm, and is also preferably not more than 400 nm, more preferably not more than 350 nm, even more preferably not more than 300 nm and further even more preferably not more than 280 nm, from the viewpoint of improving hiding power of the ink and image uniformity of the resulting printed material.

The viscosity of the water-based ink as measured at 32°C is preferably not less than 2.0 mPa•s, more preferably not less than 3.0 mPa•s and even more preferably not less than 4.0 mPa•s, and is also preferably not more than 12 mPa•s, more preferably not more than 9.0 mPa•s and even more preferably not more than 7.0 mPa•s, from the viewpoint of improving substrate-adhesion properties of the ink, and image sharpness and image uniformity of the resulting printed material.

From the viewpoint of improving substrate-adhesion properties of the ink, and image sharpness and image uniformity of the resulting printed material, the static surface tension of the water-based ink as measured at 20°C is preferably not less than 22 mN/m, more preferably not less than 24 mN/m and even more preferably not less than 25 mN/m, and is also preferably not more than 45 mN/m, more preferably not more than 40 mN/m and even more preferably not more than 35 mN/m.

The pH value of the water-based ink as measured at 25°C is preferably not less than 7.0, more preferably not less than 8.0, even more preferably not less than 8.5 and further even more preferably not less than 8.7 from the viewpoint of improving substrate-adhesion properties of the ink, and image sharpness and image uniformity of the resulting printed material, and is also preferably not more than 11.0 and more preferably not more than 10.0 from the viewpoint of improving the resistance of members to the water-based ink and suppressing skin irritation.

Meanwhile, the average particle size, static surface tension, viscosity and pH value may be measured by the respective methods described in Examples below.

<Ink-Jet Printing Method>

In the image-forming method by an ink-jet printing method as used in the present invention, the aforementioned water-based ink is ejected from ejection nozzles of an ink-jet print head (hereinafter also referred to merely as a "print head") onto a treated surface of a surface-treated low-liquid absorbing substrate as a printing substrate to print characters or images thereon.

An ink-jet printing apparatus used in the present invention may be equipped with a plurality of ink-jet print heads from which a plurality of the water-based inks are respectively ejected.

The ink droplets are preferably ejected by a piezoelectric method. In the piezoelectric method, the ink droplets are ejected from a number of nozzles communicated with respective pressure chambers by vibrating a wall surface of the respective pressure chambers by means of a piezoelectric element. Meanwhile, in the present invention, there may also be used a thermal method for ejecting the ink droplets.

The voltage applied to the print head is preferably not less than 5 V, more preferably not less than 10 V and even more preferably not less than 15 V, and is also preferably not more than 40 V, more preferably not more than 35 V and even more preferably not more than 30 V, from the viewpoint of conducting high-speed printing with high efficiency, etc.

The drive frequency of the print head is preferably not less than 2 kHz, more preferably not less than 5 kHz and even more preferably not less than 8 kHz, and is also preferably not more than 80 kHz, more preferably not more than 70 kHz and even more preferably not more than 60 kHz, from the viewpoint of conducting high-speed printing with high efficiency, etc.

The amount of the ink droplets ejected is preferably not less than 1 pL, more preferably not less than 3 pL and even more preferably not less than 5 pL, and is also preferably not more than 30 pL, more preferably not more than 25 pL and even more preferably not more than 20 pL, as calculated per one ink droplet ejected, from the viewpoint of maintaining accuracy of impact positions of the ink droplets as well as from the viewpoint of improving image sharpness and image uniformity of the resulting printed material.

The print resolution is preferably not less than 300 dpi and more preferably not less than 500 dpi. Meanwhile, the term "print resolution" as used herein means the number of dots per inch (2.54 cm) which are formed on a printing substrate. For example, the "print resolution of 600 dpi" means that when the ink droplets are ejected onto the printing substrate using a line print head on which a nozzle row is arranged such that the number of nozzle ports per a length of the nozzle row corresponds to 600 dpi (dots/inch), a corresponding dot row of 600 dots per inch is formed in the direction perpendicular to a transporting direction of the printing substrate, and further when ejecting the ink droplets while moving the printing substrate in the transporting direction thereof, the dot row of 600 dots per inch is also formed on the printing substrate along the transporting direction thereof. In the present specification, it is assumed that the value of the print resolution in the direction perpendicular to the transporting direction of the surface-treated low-liquid absorbing substrate as the printing substrate is the same as the value of the print resolution in the transporting direction of the printing substrate.

From the viewpoint of reducing viscosity of the ink and improving ejection properties of the ink, an inside temperature of the print head is preferably controlled to not lower than 20°C, more preferably not lower than 25°C and even more preferably not lower than 30°C, and is also preferably controlled to not higher than 45°C, more preferably not higher than 40°C and even more preferably not higher than 38°C.

The temperature of the treated surface of the surface-treated low-liquid absorbing substrate which is opposed to a region of the print head from which the ink is ejected is preferably controlled to not lower than 28°C, more preferably not lower than 30°C and even more preferably not lower than 31°C, and is also preferably controlled to not higher than 45°C, more preferably not higher than 40°C and even more preferably not higher than 38°C.

The amount of the ink deposited on the treated surface of the printing substrate in terms of a solid content thereof is preferably not less than 0.1 g/m$^2$, and is also preferably not more than 25 g/m$^2$ and more preferably not more than 20 g/m$^2$, from the viewpoint of improving substrate-adhesion properties of the ink, and image sharpness and image uniformity of the resulting printed material.

In the image-forming method of the present invention, from the viewpoint of improving substrate-adhesion properties of the ink, and image sharpness and image uniformity of the resulting printed material, it is preferred that after ejecting the ink droplets onto the treated surface of the surface-treated low-liquid absorbing substrate by an ink-jet printing method in the step 2 to print characters or images thereon, there is further conducted the step of drying the ink droplets impacted and deposited on the treated surface.

The temperature of the treated surface in the drying step is preferably not lower than 30°C, more preferably not lower than 40°C and even more preferably not lower than 50°C from the viewpoint of improving substrate-adhesion properties of the ink, and image sharpness and image uniformity of the resulting printed material, and is also preferably not higher than 200°C, more preferably not higher than 150°C, even more preferably not higher than 120°C and further even more preferably not higher than 90°C from the viewpoint of suppressing deformation of the printing substrate owing to heat applied thereto and saving energy consumed.

The drying time in the drying step is preferably not less than 3 minutes and more preferably not less than 5 minutes from the viewpoint of improving substrate-adhesion properties of the ink, and image sharpness and image uniformity of the resulting printed material, and is also preferably not more than 30 minutes and more preferably not more than 15 minutes from the viewpoint of suppressing deformation of the printing substrate owing to heat applied thereto and saving energy consumed.

EXAMPLES

In the following Synthesis Example, Production Examples, Examples and Comparative Examples, various properties and characteristics were measured and evaluated by the following methods. Moreover, in the following Synthesis Example, Production Examples, Examples and Comparative Examples, the "part(s)" and "%" indicate "part(s) by mass" and "% by mass", respectively, unless otherwise specified.

(1) Measurement of Weight-Average Molecular Weights (Mw) of Polyester Resin (a) and Polymer (II)

The weight-average molecular weights (Mw) of the polyester resin (a) and the polymer (II) were respectively measured by gel permeation chromatography [GPC apparatus: "HLC-8120GPC" available from Tosoh Corporation; columns: "TSK-GEL, $\alpha$-M" x 2 available from Tosoh Corporation; flow rate: 1 mL/min] using a solution prepared by dissolving phosphoric acid and lithium bromide in $N,N$-dimethylformamide such that concentrations of phosphoric acid and lithium bromide in the resulting solution were 60 mmol/L and 50 mmol/L, respectively, as an eluent, and using monodisperse polystyrenes having previously known molecular weights as a reference standard substance.

(2) Measurement of Average Particle Sizes of Polyester Resin (a) in Polyester Resin Emulsion (A) or Treating Liquid as well as Pigment-Containing Polymer Particles and Fixing Aid Polymer Particles

The measured cumulant average particle size by cumulant analysis using a laser particle analyzing system "ELS-8000" available from Otsuka Electrics Co., Ltd was defined as an average particle size of each of the polyester resin (a) in the polyester resin emulsion (A) or the treating liquid as well as pigment-containing polymer particles and fixing aid polymer particles. The measurement was conducted under the conditions including a temperature of 25°C, an angle between incident light and detector of 90° and a cumulative number of 100 times, and a refractive index of water (1.333) was input to the analyzing system as a refractive index of the dispersing medium. The concentration of the polyester resin emulsion (A) or the treating liquid to be measured was adjusted to 5 x $10^{-3}$% in terms of a solid content thereof.

(3) Measurement of pH of each of Polyester Resin Emulsion (A), Treating Liquid and Water-Based Ink

The pH value of each of the polyester resin emulsion (A), the treating liquid and the water-based ink was measured at 25°C using a bench-top pH meter "F-71" available from Horiba Ltd., equipped with a pH electrode "6337-10D" available from Horiba Ltd.

(4) Measurement of Viscosity of each of Water Dispersion of Pigment-Dispersing Polymer Particles and Treating Liquid

The viscosity of each of the water dispersion of the pigment-dispersing polymer particles and the treating liquid was measured at 20°C using an E-type viscometer "Model No.: TV-25" (equipped with a standard cone rotor (1°34' x R24); rotating speed: 100 rpm) available from Toki Sangyo Co., Ltd.

(5) Measurement of Viscosity of Water-Based Ink

The viscosity of the water-based ink was measured at 32°C using an E-type viscometer "TV-25" (equipped with a standard cone rotor (1°34' x R24); rotating speed: 50 rpm) available from Toki Sangyo Co., Ltd.

(6) Measurement of Static Surface Tension of each of Treating Liquid and Water-Based Ink

A platinum plate was dipped in 5 g of a sample adjusted to 20°C which was filled in a cylindrical polyethylene container (3.6 cm in diameter x 1.2 cm in depth), and the static surface tension of the sample was measured at 20°C using a surface tension meter "CBVP-Z" available from Kyowa Interface Science Co., Ltd., by a Wilhelmy method.

(7) Measurement of Water Absorption of Substrate

The water absorption of a substrate when contacting the substrate with pure water for 100 milliseconds was measured as follows. That is, using an automatic scanning absorptometer "KM500win" available from Kumagai Riki Kogyo Co., Ltd., the amount of the pure water transferred to the substrate in a pure water contact time of 100 milliseconds was measured at 23°C under a relative humidity of 50%. The thus measured amount of pure water transferred to the substrate was defined as the aforementioned water absorption of the substrate. The measuring conditions are shown below.

"Spiral Method"

Contact time: 0.010 to 1.0 (sec)
Pitch (mm): 7
Length Per Sampling (degree): 86.29
Start Radius (mm): 20
End Radius (mm): 60
Min Contact Time (ms): 10
Max Contact Time (ms): 1000
Sampling Pattern (1-50): 50
Number of Sampling Points (>0): 19

"Square Head"

Slit Span (mm): 1
Slit Width (mm): 5

(8) Measurement of Solid Content

Sodium sulfate dried to constant weight in a desiccator was weighed in an amount of 10.0 g and charged into a 30 mL polypropylene container ($\phi$: 40 mm; height: 30 mm), and about 1.0 g of a sample to be measured was added to the container. The contents of the container were mixed with each other and then accurately weighed. The resulting mixture was maintained in the container at 105°C for 2 hours to remove volatile components therefrom, and further allowed to stand in a desiccator for 15 minutes to measure a mass thereof. The mass of the sample after removing the volatile components therefrom was regarded as a mass of solids therein. The solid content of the sample was calculated by dividing the mass of the solids by the mass of the sample initially added.

Synthesis Example 1 (Synthesis of Pigment-Dispersing Polymer)

Sixteen parts of methacrylic acid available from FUJIFILM Wako Pure Chemical Corporation, 44 parts of styrene available from FUJIFILM Wako Pure Chemical Corporation, 30 parts of a styrene macromonomer "AS-6S" (number-average molecular weight: 6,000; solid content: 50%) available from Toagosei Co., Ltd., and 25 parts of methoxypolyethylene glycol methacrylate "BLEMMER PME-200" available from NOF Corporation were mixed with each other to prepare 115 parts of a monomer mixture solution.
Eighteen parts of methyl ethyl ketone and 0.03 part of 2-mercaptoethanol as a polymerization chain transfer agent as well as 10% (11.5 parts) of the monomer mixture solution prepared above were charged into a reaction vessel and mixed with each other, and then an inside atmosphere of the reaction vessel was fully replaced with nitrogen gas.
On the other hand, a mixed solution prepared by mixing remaining 90% (103.5 parts) of the monomer mixture solution, 0.27 part of the aforementioned polymerization chain transfer agent, 42 parts of methyl ethyl ketone and 3 parts of 2,2'-azobis(2,4-dimethylvaleronitrile) "V-65" as a polymerization initiator available from FUJIFILM Wako Pure Chemical Corporation, was charged into a dropping funnel. In a nitrogen atmosphere, the mixed solution in the reaction vessel was heated to 75°C while stirring, and then the mixed solution in the dropping funnel was added dropwise into the reaction vessel over 3 hours. After the elapse of 2 hours from completion of the dropwise addition while maintaining the resulting mixed solution at 75°C, a solution prepared by dissolving 3 parts of the aforementioned polymerization initiator in 5 parts of methyl ethyl ketone was added to the reaction vessel, and the resulting reaction solution was further aged at 75°C for 2 hours and then at 80°C for 2 hours, followed by further adding 50 parts of methyl ethyl ketone thereto, thereby obtaining a solution of a pigment-dispersing polymer (weight-average molecular weight: 50,000). The solid content of the thus obtained solution of the pigment-dispersing polymer was 45% by mass.

Production Example I-1 (Production of Water Dispersion K of Black Pigment-Containing Polymer Particles)

The solution of the pigment-dispersing polymer obtained in Synthesis Example 1 was weighed in an amount of 95.2 parts and dissolved in 53.9 parts of methyl ethyl ketone, and then the resulting solution was mixed with 15.0 parts of a 5N sodium hydroxide aqueous solution and 0.5 part of a 25% ammonia aqueous solution both acting as a neutralizing agent as well as 341.3 parts of ion-exchanged water. Furthermore, 100 parts of C.I. Pigment Black 7 (P.B. 7) as a carbon black pigment available from Cabot Corporation were added to the resulting mixture to prepare a pigment mixed solution. The degree of neutralization of the polymer in the thus obtained pigment mixed solution was 78.8 mol%. The resulting pigment mixed solution was mixed at 20°C for 1 hour using a disper blade operated at 7000 rpm. The resulting dispersion liquid was subjected to dispersion treatment under a pressure of 180 MPa using a Microfluidizer "High-Pressure Homogenizer M-140K" available from Microfluidics Corporation by passing the dispersion liquid through the device 15 times.

The thus obtained dispersion liquid of the black pigment-containing polymer particles was maintained at 60°C under reduced pressure to remove methyl ethyl ketone therefrom, followed by further removing a part of water therefrom. The resulting dispersion was subjected to centrifugal separation, and a liquid layer portion separated therefrom was subjected to filtration treatment through a filter "Minisart Syringe Filter" (pore size: 5 μm; material: cellulose acetate) available from Sartorius Inc., to remove coarse particles therefrom, thereby obtaining a water dispersion of the black pigment-containing polymer particles. The solid content of the thus obtained water dispersion was 25%.

Then, 0.45 part of an epoxy crosslinking agent "DENACOL EX 321L" (tradename; trimethylolpropane polyglycidyl ether; epoxy equivalent: 130) available from Nagase ChemteX Corporation and 15.23 parts of ion-exchanged water were added to 100 parts of the resulting water dispersion of the black pigment-containing polymer particles, and the obtained mixture was subjected to heat treatment at 70°C for 3 hours while stirring. After cooling the obtained dispersion to room temperature, a liquid layer portion separated therefrom was subjected to filtration treatment through a filter "Minisart Syringe Filter" (pore size: 5 μm; material: cellulose acetate) available from Sartorius Inc., to remove coarse particles therefrom, thereby obtaining a water dispersion K of the black pigment-containing polymer particles (solid content: 22.00%). The average particle size of the black pigment-containing polymer particles in the resulting water dispersion K was 100 nm. The results are shown in Table 1-1.

Production Example I-2 (Production of Water Dispersion W of White Pigment-Containing Polymer Particles)

A 5 L-capacity plastic container was charged with 2,500 parts of a polyacrylic acid dispersant "ARON AC-10SL" (solid content: 40%) available from Toagosei Co., Ltd., and 3.57 parts of ion-exchanged water, and then while cooling the thus filled container in an ice bath and stirring the resulting solution therein at 100 rpm, 1666.43 parts of a 5N sodium hydroxide aqueous solution was slowly added thereto to neutralize the solution. The aqueous solution obtained by the neutralization treatment was mixed with ion-exchanged water to adjust a solid content of the solution to 20%, thereby obtaining a neutralized aqueous solution of the polyacrylic acid dispersant.

Then, a 2 L-capacity plastic container was charged with 30.0 parts of the thus obtained neutralized aqueous solution of the polyacrylic acid dispersant, 300 parts of C.I. Pigment White 6 (P.W. 6; "Titanium Oxide CR80") available from ISHIHARA SANGYO KAISHA, LTD., and 306 parts of water. Then, 1000 parts of zirconia beads were added to the container, and the contents of the container were subjected to dispersion treatment for 8 hours using a bench top-type pot mill pedestal available from AS ONE Corporation. Thereafter, the resulting dispersion was filtered through a metal mesh screen to remove the zirconia beads from the resulting dispersion, and then ion-exchanged water was added to the dispersion to adjust a solid content thereof to a desired value, thereby obtaining a water dispersion W of white pigment-containing polymer particles (solid content: 30.00%). The average particle size of the white pigment in the thus obtained water dispersion W was 270 nm. The results are shown in Table 1-1.

TABLE 1-1: Production of Water Dispersion of Pigment-Containing Polymer Particles

| | Symbol | K | W |
|---|---|---|---|
| Water dispersion of pigment-containing polymer particles | Kind of pigment | Black | White |
| | | P.B. 7 | P.W. 6 |
| | Solid content (% by mass) | 22.00 | 30.00 |
| | Ratio of pigment introduced (% by mass) | 68.76 | 98.00 |
| Composition compounded (part(s) by mass) | Pigment | 15.13 | 29.40 |
| | Pigment-dispersing polymer | 6.48 | 0.60 |
| | "DENACOL EX 321L" | 0.39 | 0.00 |
| | Ion-exchanged water | 78.00 | 70.00 |
| | Total | 100.00 | 100.00 |
| Properties | Viscosity at 20°C (mPa•s) | 4.2 | 3.1 |
| | pH | 9.9 | 7.1 |
| | Average particle size (nm) | 100 | 270 |

Production Example I-3 (Production of Water Dispersion of Fixing Aid Polymer Particles)

A 1000 mL-capacity separable flask was charged with 145 parts of methyl methacrylate available from FUJIFILM Wako Pure Chemical Corporation, 50 parts of 2-ethylhexyl acrylate available from FUJIFILM Wako Pure Chemical Corporation, 5 parts of methacrylic acid available from FUJIFILM Wako Pure Chemical Corporation, 18.5 parts of "LATEMUL E118B" (active ingredient content: 26%) as an emulsifier available from Kao Corporation, 96 parts of ion-exchanged water and potassium persulfate available from FUJIFILM Wako Pure Chemical Corporation, and the contents of the flask were stirred using a stirring blade (300 rpm), thereby obtaining a monomer emulsion.

A reaction vessel was charged with 4.6 parts of "LATEMUL E118B", 186 parts of ion-exchanged water and 0.08 part of potassium persulfate, and an inside atmosphere of the reaction vessel was fully replaced with nitrogen gas. In a nitrogen atmosphere, the contents of the reaction vessel were heated to 80°C while stirring with a stirring blade (200 rpm), and then the aforementioned monomer emulsion was charged into a dropping funnel and added dropwise into the reaction vessel over 3 hours to conduct the reaction therebetween. The solid content of the resulting water dispersion of the fixing aid polymer particles was 41.6%, and the average particle size of the fixing aid polymer particles was 100 nm.

Production Example II-1 (Production of Black Ink Bk-1)

A mixed solution was prepared by mixing 508.94 parts of the water dispersion K of the black pigment-containing polymer particles (solid content: 22.00%) obtained in Production Example I-1, 48.28 parts of the water dispersion of the fixing aid polymer particles (solid content: 41.6%) obtained in Production Example I-3, 286.00 parts of propylene glycol (boiling point: 188°C), 44.00 parts of diethylene glycol monoisobutyl ether (boiling point: 230°C), 5.50 parts of a silicone-based surfactant "KF-6011" (polyether-modified silicone; HLB: 14.5) available from Shin-Etsu Chemical Co., Ltd., and 207.28 parts of ion-exchanged water with each other. The resulting mixed solution was subjected to filtration treatment by passing through a filter "Minisart Syringe Filter" (pore size: 5.0 μm; material: cellulose acetate) available from Sartorius Inc., thereby obtaining a black ink Bk-1 as an ink to be used together with the below-mentioned treating liquid. Various properties of the thus obtained black water-based ink are shown in Table 1-2.

Production Example II-2 (Production of White Ink W-1)

A mixed solution was prepared by mixing 374.15 parts of the water dispersion W of the white pigment-containing polymer particles (solid content: 30.00%) obtained in Production Example I-2, 132.63 parts of the water dispersion of the fixing aid polymer particles (solid content: 41.6%) obtained in Production Example I-3, 286.00 parts of propylene glycol (boiling point: 188°C), 44.00 parts of diethylene glycol monoisobutyl ether (boiling point: 230°C), 5.50 parts of a silicone-based surfactant "KF-6011" (polyether-modified silicone) available from Shin-Etsu Chemical Co., Ltd., 22.81 parts of a 1N sodium hydroxide aqueous solution and 234.91 parts of ion-exchanged water with each other. The resulting mixed solution was subjected to filtration treatment by passing through a filter "Minisart Syringe Filter" (pore size: 5.0 μm; material: cellulose acetate) available from Sartorius Inc., thereby obtaining a white ink W-1 as an ink to be used together with the below-mentioned treating liquid. Various properties of the thus obtained white water-based ink are shown in Table 1-2.

TABLE 1-2: Production of Water-Based Ink

| Symbol of water-based ink | | | Bk-1 | W-1 |
|---|---|---|---|---|
| Composition compounded (part(s) by mass) | Water dispersion K of black pigment-containing polymer particles | | 508.94 | |
| | Water dispersion W of white pigment-containing polymer particles | | | 374.15 |
| | Water dispersion of fixing aid polymer particles | | 48.28 | 132.63 |
| | Organic solvent (III) | Propylene glycol | 286.00 | 286.00 |
| | | Diethylene glycol monoisobutyl ether | 44.00 | 44.00 |
| | Surfactant (IV) | "KF-6011"*1 | 5.50 | 5.50 |
| | 1N NaOH aqueous solution | | 0.00 | 22.81 |
| | Ion-exchanged water | | 207.28 | 234.91 |

(continued)

| Symbol of water-based ink | | | Bk-1 | W-1 |
|---|---|---|---|---|
| Water-based ink | Average particle size | nm | 101.0 | 265.0 |
| | Viscosity at 32°C | mPa•s | 5.5 | 5.7 |
| | Static surface tension | mN/m | 28.7 | 27.5 |
| | pH | - | 9.2 | 8.8 |
| Note *1: Polyether-modified silicone "KF-6011" available from Shin-Etsu Chemical Co., Ltd. | | | | |

(Production of Polyester Resins (a) (PES-1 to PES-6))

Production Examples 1-1 to 1-6

The respective raw material monomers of the polyester resin (a) as shown in Table 2 as well as tin di(2-ethyl hexanoate) in an amount of 0.5% by mass on the basis of a whole amount of the monomers were charged into a 500 mL-capacity four-necked flask equipped with a thermometer, a stainless steel stirring bar, a flow-down type condenser and a nitrogen inlet tube. The contents of the flask were stepwise heated from 180°C to 210°C over 2 hours in a mantle heater in a nitrogen atmosphere and reacted at 210°C for 1 hour, and after reducing an inside pressure of the flask to 8.3 kPa, the reaction was further continued under the pressure of 8.3 kPa for 1 hour. The thus obtained respective polyester resins (a) (PES-1 to PES-6) were cooled to room temperature and then finely pulverized into a powder shape.

Meanwhile, upon calculation of the density of sulfonic acid groups in the respective polyester resins, the number of moles of the sulfonic acid groups in the respective polyester resins was determined according to the formula of "(number of moles of sulfonic acid group-containing monomer) x (number of sulfonic acid group(s) in the monomer)", and the density of the sulfonic acid groups in the respective polyester resins was calculated by subtracting 18 corresponding to a molecular weight per 1 mol of water by-produced upon condensation reaction for production of the polyester. For example, in the case of Production Example 1-1, the density of the sulfonic acid groups in the polyester resin is calculated as follows:

$$\text{Density of sulfonic acid groups} =$$
$$0.1 \times 1 \times 1000/(26.82 + 149.52 + 62.07 - 18) = 0.45 \text{ mmol/g}$$

TABLE 2

| | | | Production Examples | | | | | | | | | | | |
|---|---|---|---|---|---|---|---|---|---|---|---|---|---|---|
| | | | 1-1 | | 1-2 | | 1-3 | | 1-4 | | 1-5 | | 1-6 | |
| | | | Part(s) by mass | molar ratio*2 | Part(s) by mass | molar ratio*2 | Part(s) by mass | molar ratio*2 | Part(s) by mass | molar ratio*2 | Part(s) by mass | molar ratio*2 | Part(s) by mass | molar ratio*2 |
| Composition compounded*1 | Carboxylic acid component | Na 5-sulfoisophthalate | 26.82 | 0.10 | 16.09 | 0.06 | 69.73 | 0.26 | 32.18 | 0.12 | 2.68 | 0.01 | | |
| | | Terephthalic acid | 149.52 | 0.90 | 156.16 | 0.94 | 122.94 | 0.74 | | | 164.47 | 0.99 | 166.13 | 1.00 |
| | | Naphthalenedicarboxylic acid | | | | | | | 190.25 | 0.88 | | | | |
| | Alcohol component | Ethylene glycol | 62.07 | 1.00 | 62.07 | 1.00 | 62.07 | 1.00 | 62.07 | 1.00 | 62.07 | 1.00 | 62.07 | 1.00 |
| No. of polyester resin (a) | | | PES-1 | | PES-2 | | PES-3 | | PES-4 | | PES-5 | | PES-6 | |
| Properties | Density of sulfonic acid groups (mmol/g) | | 0.45 | | 0.28 | | 1.10 | | 0.45 | | 0.05 | | 0.00 | |
| | Weight-average molecular weight (Mw) | | 10500 | | 13700 | | 14800 | | 12900 | | 11900 | | 10300 | |

Note *1: The composition of the polyester resin (a) compounded is indicated on an "as-is" basis (on a wet weight basis).
*2: Molar ratio assuming that a whole amount of the alcohol component is 1.00.

(Production of Polyester Resin Emulsions (A) (Em-1 to Em-6))

Production Examples 2-1 to 2-6

The raw material or respective raw materials other than the polyester resin (a) as shown in Table 3 were charged into a heat-resistant glass bottle, and heated from room temperature to 80°C while stirring with a stirrer at 100 rpm. At the time of reaching 80°C, the powdery polyester resin (a) was added to the glass bottle, and the contents of the glass bottle were continuously stirred for 5 hours. When converting the contents of the glass bottle into a uniform opaque white liquid, the resulting liquid was cooled to room temperature and then subjected to filtration treatment through a metal mesh screen, thereby obtaining respective polyester resin emulsions (A) (Em-1 to Em-6). The solid content of the respective polyester resin emulsions (A) was 25.00%.

TABLE 3

| | | | Production Examples | | | | | |
|---|---|---|---|---|---|---|---|---|
| | | | 2-1 | 2-2 | 2-3 | 2-4 | 2-5 | 2-6 |
| Composition compounded (part(s) by mass)*1 | Polyester resin (a) | PES-1 | 25.00 | | | | | |
| | | PES-2 | | 25.00 | | | | |
| | | PES-3 | | | 25.00 | | | |
| | | PES-4 | | | | 25.00 | | |
| | | PES-5 | | | | | 25.00 | |
| | | PES-6 | | | | | | 25.00 |
| | N-methyl diethanolamine | | | | | | 0.50 | 0.50 |
| | Ion-exchanged water | | 75.00 | 75.00 | 75.00 | 75.00 | 74.50 | 74.50 |
| Polyester resin emulsion (A) | No. | | Em-1 | Em-2 | Em-3 | Em-4 | Em-5 | Em-6 |
| | Average particle size (nm) | | 58 | 55 | 48 | 88 | 78 | 66 |
| | pH | | 5.2 | 5.4 | 5.2 | 5.3 | 6.7 | 6.1 |
| Note *1: The composition of the polyester resin emulsion (A) compounded is indicated on an "as-is" basis (on a wet weight basis). | | | | | | | | |

Examples 1 to 5 and Comparative Examples 1 to 3

(1) Production of Treating Liquids 1 to 5 and C1 to C3

Ion-exchanged water, dipropylene glycol monomethyl ether (solubility parameter: 17.6 MPa$^{1/2}$) as a solvent (b-1) and N-methyl diethanolamine as a neutralizing agent (C) as shown in Table 4 were charged into a 200 mL-capacity beaker, and the contents of the breaker were stirred with a stirrer at room temperature for 30 minutes to obtain a mixed solution. Then, the polyester resin emulsion (A) was added to the thus obtained mixed solution, followed by stirring the resulting mixture for 30 minutes. The mixture was then subjected to filtration treatment through a metal mesh screen, thereby obtaining treating liquids 1 to 5 and C1 to C3.

(II) Image-Forming Method

[Step 1: Preparation of Surface-Treated Low-Liquid Absorbing Substrate]

A corona-treated PET film "FE2001" (tradename; thickness: 25 μm; water absorption as measured by contacting the substrate and pure water for 100 milliseconds: 0 g/m$^2$) as a low-liquid absorbing substrate available from Futamura Chemical Co., Ltd., was cut into an A4 size, and the treating liquid was applied onto the corona-treated surface of the resulting cut film using a wire bar coater #4. Then, the thus coated film was placed in a drying device adjusted to a temperature of 60°C and dried therein for 10 minutes, thereby obtaining a surface-treated low-liquid absorbing substrate. The amount of the treating liquid applied and deposited onto the low-liquid absorbing substrate was 0.8 g/m$^2$ in terms of a solid content thereof.

[Step 2: Preparation of Ink-Jet Printed Material]

(1) Printed Material Obtained Using Black Ink for Evaluation of Substrate-Adhesion Properties and Image Uniformity

Under the environmental conditions of a temperature of $25\pm1°C$ and a relative humidity of $30\pm5\%$, the black ink Bk-1 described in Table 1-2 was loaded into a print evaluation apparatus available from Trytech Co., Ltd., equipped with an ink-jet print head "KJ4B-HD06MHG-STDV" (piezoelectric type) available from Kyocera Corporation.

The operating conditions of the print evaluation apparatus were set to an applied head voltage of 26 V, a drive frequency of 20 kHz, an ejected ink droplet amount of 7 pL, a head temperature of 32°C, a print resolution of 600 dpi, the number of ink shots for flushing before being ejected of 200 shots and a negative pressure of -4.0 kPa, and the surface-treated low-liquid absorbing substrate obtained in the step 1 as a printing substrate was fixedly mounted onto a transportation table of the apparatus under reduced pressure such that a longitudinal direction of the printing substrate was aligned with a transportation direction thereof.

A printing command was transmitted to the aforementioned print evaluation apparatus to print a Duty 100% solid image on a region of 10 cm x 10 cm on the printing substrate, and then the thus printed image on the printing substrate was heated and dried on a hot plate at 60°C for 10 minutes, thereby obtaining a printed material for evaluation of substrate-adhesion properties and image uniformity on which the solid image was formed using the black ink.

(2) Printed Material Obtained Using Black Ink for Evaluation of Image Sharpness

The surface-treated low-liquid absorbing substrate obtained in the step 1 as a printing substrate was prepared by the same method as used in the above item (1), and fixedly mounted onto a transportation table of the apparatus under reduced pressure.

A printing command was transmitted to the aforementioned print evaluation apparatus to print 10 thin lines (each having a width of 1 mm and a length of 10 cm) as a Duty 100% image such that they were parallel with each other in their longitudinal side and spaced at a distance of 1 mm away from each other, and then the thus printed thin line image on the printing substrate was heated and dried on a hot plate at 60°C for 10 minutes, thereby obtaining a printed material for evaluation of image sharpness on which the thin line image was formed using the black ink.

(3) Printed Material Obtained Using White Ink for Evaluation of Image Uniformity

Under the environmental conditions of a temperature of $25\pm1°C$ and a relative humidity of $30\pm5\%$, the white ink W-1 described in Table 1-2 was loaded into a print evaluation apparatus available from Trytech Co., Ltd., equipped with an ink-jet print head "KJ4B-HD06MHG-STDV" (piezoelectric type) available from Kyocera Corporation.

The operating conditions of the print evaluation apparatus were set to an applied head voltage of 26 V, a drive frequency of 20 kHz, an ejected ink droplet amount of 16 pL, a head temperature of 32°C, a print resolution of 600 dpi, the number of ink shots for flushing before being ejected of 200 shots and a negative pressure of -4.0 kPa. The surface-treated low-liquid absorbing substrate obtained in the step 1 as a printing substrate was fixedly mounted onto a transportation table of the apparatus under reduced pressure such that a longitudinal direction of the printing substrate was aligned with a transportation direction thereof.

A printing command was transmitted to the aforementioned print evaluation apparatus to print a Duty 100% solid image on a region of 10 cm x 10 cm on the printing substrate, and then the thus printed image on the printing substrate was heated and dried on a hot plate at 60°C for 10 minutes, thereby obtaining a printed material for evaluation of image uniformity on which the solid image was formed using the white ink.

(Evaluation of Printed Material)

[Evaluation of Substrate-Adhesion Properties]

An adhesive tape "CELLOTAPE (registered trademark) CT-18S" having a width of 18 mm available from Nichiban Co., Ltd., was attached onto a solid image portion of the printed material obtained by the method described in the aforementioned item (1) using the black ink. Then, the tape end was rapidly peeled off from the solid image portion in the direction of an angle of 90° relative to a surface of the solid image portion, and the surface condition of the solid image portion after peeling off the tape therefrom was visually observed to determine an unpeeled residual area of the solid image portion and thereby evaluate substrate-adhesion properties of the ink. Assuming that when no solid image portion suffered from peeling, the value of the unpeeled residual area of the solid image portion was regarded as being 100%, the surface condition of the solid image portion after the peel test was numeralized on the basis of the unpeeled residual area thereof. The results are shown in Table 4.

[Evaluation of Image Sharpness]

The degree of increase of the width of the respective thin lines on the printed material obtained by the method described in the aforementioned item (2) using the black ink was evaluated according to the following evaluation ratings. The results are shown in Table 4.

(Evaluation Ratings)

A: No increase of the width of the respective thin lines was recognized, and no unification between the adjacent thin lines occurred;
A-: Increase of the width of the respective thin lines was recognized, but no unification between the adjacent thin lines occurred; and
B: Partial or complete unification between the adjacent thin lines occurred, so that the resulting printed material was unusable in practical applications.

[Evaluation of Image Uniformity in Case of Using Black Ink]

The degree of filling of a solid image of the printed material obtained by the method described in the aforementioned item (1) using the black ink was determined by visual observation thereof, and the optical density of the solid image was measured by the following method to evaluate image uniformity of the solid image according to the following evaluation ratings. The results are shown in Table 4.

(Measurement of Optical Density)

The optical density of the solid image was measured after allowing the resulting printed material to stand at 25°C under a relative humidity of 50% for 24 hours. The measurement of the optical density was conducted using a spectrophotometer "Spectro Eye" available from GretagMacbeth LLC under the following conditions: observation light source: D65; observation viewing angle: 2°; density standard: DIN16536, to read a numerical value of a black density component of the image. With respect to the measurement frequency, the optical density of the image was measured as follows while varying measuring positions thereon. More specifically, the optical density of the image portion printed in an outward stroke of bidirectional printing was measured at five points randomly selected therefrom, and the optical density of the image portion printed in an inward stroke of the bidirectional printing was also measured at five points randomly selected therefrom, to calculate an average value of the thus measured 10 optical density values in total. The larger the measured value becomes, the more excellent the image uniformity is.

(Evaluation Ratings)

A: The solid image was uniformly filled, and the optical density of the image was not less than 2.3;
A-: The solid image was uniformly filled, but the optical density of the image was not less than 2.1 and less than 2.3; and
B: The solid image was not filled sufficiently, so that the resulting printed material was unusable in practical applications.

[Evaluation of Image Uniformity in Case of Using White Ink]

The degree of filling of a solid image of the printed material obtained by the method described in the aforementioned item (3) using the white ink was determined by visual observation thereof, and the optical density of black was measured by the following method to evaluate image uniformity of the solid image according to the following evaluation ratings. The results are shown in Table 4.

(Measurement of Optical Density of Black)

The printed material obtained by the method described in the aforementioned item (3) using the white ink was placed on a black color portion of a hiding chart (JIS accepted product) available from Taiyu Kizai Co., Ltd., such that a printed surface of the printed material was faced upward. The optical density of black through the printed material was measured from above the printed material under the same conditions as used hereinabove in the measurement of optical density for "Evaluation of Image Uniformity in Case of Using Black Ink" by using a spectrophotometer "Spectro Eye" available from GretagMacbeth LLC. At this time, it was recognized that as the optical density of black was lowered, the image uniformity of the solid image obtained using the white ink was enhanced.

(Evaluation Ratings)

A: The solid image was uniformly filled, and the optical density of black was less than 0.80;
A-: The solid image was uniformly filled, but the optical density of black was not less than 0.80 and not more than 0.90; and
B: The solid image was not filled sufficiently, so that the resulting printed material was unusable in practical applications.

TABLE 4

| Examples and Comparative Examples | | | Ex. 1 | Ex. 2 | Com. Ex. 1 | Ex. 3 | Com. Ex. 2 | Com. Ex. 3 | Ex. 4 | Ex. 5 |
|---|---|---|---|---|---|---|---|---|---|---|
| Composition of treating liquid compounded*1 | Polyester resin emulsion (A)*2 | Em-1 | 80.00 | | | | | | | 80.00 |
| | | Em-2 | | 80.00 | | | | | | |
| | | Em-3 | | | 80.00 | | | | 40.00 | |
| | | Em-4 | | | | 80.00 | | | | |
| | | Em-5 | | | | | 80.00 | | | |
| | | Em-6 | | | | | | 80.00 | 40.00 | |
| | Solvent (b-1) | Dipropylene glycol monomethyl ether | 5.00 | 5.00 | 5.00 | 5.00 | 5.00 | 5.00 | 5.00 | 5.00 |
| | Neutralizing agent (C) | *N*-methyl diethanolamine | 1.00 | 1.00 | 1.00 | 1.00 | 1.00 | 1.00 | 1.00 | |
| | Organic acid | Acetic acid | | | | | | | | |
| | Ion-exchanged water | | 14.00 | 14.00 | 14.00 | 14.00 | 14.00 | 14.00 | 14.00 | 15.00 |
| Treating liquid | No. | | 1 | 2 | C1 | 3 | C2 | C3 | 4 | 5 |
| | Density of sulfonic acid groups in polyester resin (a) (mmol/g) | | 0.45 | 0.28 | 1.10 | 0.45 | 0.05 | 0.00 | 0.55 | 0.45 |
| | pH | | 8.0 | 7.9 | 8.5 | 8.2 | 8.4 | 8.1 | 8.1 | 6.1 |
| | Viscosity at 20° [mPa/s] | | 3.8 | 6.8 | 4.9 | 10.1 | 5.1 | 5.1 | 5.1 | 4.0 |
| | Static surface tension [mN/m] | | 50.1 | 49.7 | 49.4 | 49.3 | 50.5 | 47.4 | 47.4 | 49.7 |
| Evaluation results | Substrate-adhesion properties (black ink) | | 100 | 100 | 100 | 100 | 100 | 100 | 100 | 100 |
| | Image sharpness (black ink) | | A | A | B | A | A | A | A- | A |
| | Image uniformity (black ink) | | A | A | A- | A- | B | B | A | A |
| | Image uniformity (white ink) | | A- | A | B | A- | A | A | A- | A- |
| Note *1: The composition of the treating liquid compounded is indicated on an "as-is" basis (on a wet weight basis). *2: The solid content of the polyester resin emulsion (A) was 25.00% by mass. | | | | | | | | | | |

From the results shown in Table 4, it was confirmed that the printed materials obtained in Examples 1 to 5 were excellent in substrate-adhesion properties of the respective inks as well as excellent in image sharpness and image uniformity, even when printed on a low-liquid absorbing substrate, as compared to those printed materials obtained in Comparative Examples 1 to 3.

In Comparative Example 1, the density of the sulfonic acid groups in the polyester resin was 1.10 mmol/g, and it is therefore considered that since the treating liquid was dissolved in the ink, the resulting printed material was deteriorated in image sharpness.

In Comparative Example 2, the density of the sulfonic acid groups in the polyester resin was 0.05 mmol/g, and in Comparative Example 3, the polyester resin contained no sulfonic acid group, and it is therefore considered that since the respective treating liquids failed to exhibit sufficient affinity to the ink, the resulting printed materials obtained using the black ink were deteriorated in image uniformity.

**Claims**

1. A treating liquid comprising a polyester resin (a) in the form of an emulsion thereof and a solvent (b-1) having a solubility parameter of not less than 15 $(MPa)^{1/2}$ and not more than 27 $(MPa)^{1/2}$, in which:

   the polyester resin (a) comprises sulfonic acid groups, and a density of the sulfonic acid groups in the polyester resin (a) is not less than 0.1 mmol/g and not more than 0.8 mmol/g;
   **characterized in that**
   the content of the polyester resin (a) in the treating liquid is not less than 15% by mass; and
   the content of the solvent (b-1) in the treating liquid is not less than 1% by mass and not more than 10% by mass.

2. The treating liquid according to claim 1, wherein a pH value of the treating liquid is not less than 5 and not more than 10 as measured at 25°C.

3. The treating liquid according to claim 1 or 2, wherein an average particle size of the polyester resin (a) in the form of the emulsion is not less than 10 nm and not more than 150 nm, wherein average particle size of the polyester resin (a) is determined as set out under the corresponding header in the examples.

4. The treating liquid according to any one of claims 1 to 3, wherein a weight-average molecular weight of the polyester resin (a) is not less than 5,000 and not more than 30,000, wherein weight-average molecular weight of the polyester resin (a) is determined as set out under the corresponding header in the examples.

5. The treating liquid according to any one of claims 1 to 4, wherein the polyester resin (a) comprises at least one constitutional unit selected from the group consisting of a constitutional unit derived from sulfoisophthalic acid and a constitutional unit derived from sulfoterephthalic acid.

6. The treating liquid according to any one of claims 1 to 4, wherein the polyester resin (a) comprises a constitutional unit derived from a sulfonic acid group-containing carboxylic acid component (a-1) and a constitutional unit derived from a sulfonic acid group-free carboxylic acid component (a-2).

7. The treating liquid according to claim 6, wherein a molar ratio of the constitutional unit derived from the sulfonic acid group-containing carboxylic acid component (a-1) and the constitutional unit derived from the sulfonic acid group-free carboxylic acid component (a-2) [(a-1)/(a-2)] is not less than 5/95 and not more than 50/50.

8. The treating liquid according to any one of claims 1 to 7, further comprising a neutralizing agent (C).

9. The treating liquid according to claim 8, wherein the neutralizing agent (C) is a water-soluble amine compound.

10. The treating liquid according to claim 8 or 9, wherein a content of the neutralizing agent (C) in the treating liquid is not less than 0.1% by mass and not more than 5% by mass.

11. A surface-treated low-liquid absorbing substrate comprising a surface treatment layer formed of the treating liquid according to any one of claims 1 to 10.

12. An ink set comprising the treating liquid according to any one of claims 1 to 10, and a water-based ink comprising at least a colorant (I) and water.

**13.** The ink set according to claim 12, wherein the colorant (I) is a pigment that is present in the form of particles obtained by dispersing the pigment with a polymer (II-1).

**14.** An image-forming method comprising the following step 1 and step 2:

Step 1: applying the treating liquid according to any one of claims 1 to 10 onto a surface of a low-liquid absorbing substrate and drying the treating liquid on the low-liquid absorbing substrate to obtain a surface-treated low-liquid absorbing substrate; and
Step 2: printing characters or images on a treated surface of the surface-treated low-liquid absorbing substrate obtained in the step 1 by an ink-jet printing method.

**15.** A use of the treating liquid according to any one of claims 1 to 10 for surface treatment of a substrate on a surface of which characters or images are to be formed using an ink.

**Patentansprüche**

**1.** Behandlungsflüssigkeit, umfassend ein Polyesterharz (a) in Form einer Emulsion davon und ein Lösungsmittel (b-1) mit einem Löslichkeitsparameter von nicht weniger als 15 $(MPa)^{1/2}$ und nicht mehr als 27 $(MPa)^{1/2}$, wobei:

das Polyesterharz (a) Sulfonsäuregruppen umfasst und eine Dichte der Sulfonsäuregruppen in dem Polyesterharz (a) nicht weniger als 0,1 mmol/g und nicht mehr als 0,8 mmol/g beträgt;
**dadurch gekennzeichnet, dass**
der Gehalt des Polyesterharzes (a) in der Behandlungsflüssigkeit nicht weniger als 15 Massen-% beträgt; und
der Gehalt des Lösungsmittels (b-1) in der Behandlungsflüssigkeit nicht weniger als 1 Massen-% und nicht mehr als 10 Massen-% beträgt.

**2.** Behandlungsflüssigkeit gemäß Anspruch 1, wobei ein pH-Wert der Behandlungsflüssigkeit, gemessen bei 25°C, nicht weniger als 5 und nicht mehr als 10 beträgt.

**3.** Behandlungsflüssigkeit gemäß Anspruch 1 oder 2, wobei eine durchschnittliche Partikelgröße des Polyesterharzes (a) in Form der Emulsion nicht weniger als 10 nm und nicht mehr als 150 nm beträgt, wobei die durchschnittliche Partikelgröße des Polyesterharzes (a), wie unter der entsprechenden Überschrift in den Beispielen angegeben, bestimmt wird.

**4.** Behandlungsflüssigkeit gemäß einem der Ansprüche 1 bis 3, wobei ein gewichtsmittleres Molekulargewicht des Polyesterharzes (a) nicht weniger als 5.000 und nicht mehr als 30.000 beträgt, wobei das gewichtsmittlere Molekulargewicht des Polyesterharzes (a) wie unter der entsprechenden Überschrift in den Beispielen angegeben bestimmt wird.

**5.** Behandlungsflüssigkeit gemäß einem der Ansprüche 1 bis 4, wobei das Polyesterharz (a) mindestens eine Struktureinheit umfasst, die aus der Gruppe ausgewählt ist, die aus einer von Sulfoisophthalsäure abgeleiteten Struktureinheit und einer von Sulfoterephthalsäure abgeleiteten Struktureinheit besteht.

**6.** Behandlungsflüssigkeit gemäß einem der Ansprüche 1 bis 4, wobei das Polyesterharz (a) eine Struktureinheit, die von einer Sulfonsäuregruppen enthaltenden Carbonsäurekomponente (a-1) abgeleitet ist, und eine Struktureinheit, die von einer sulfonsäuregruppenfreien Carbonsäurekomponente (a-2) abgeleitet ist, umfasst.

**7.** Behandlungsflüssigkeit gemäß Anspruch 6, wobei ein Molverhältnis von der Struktureinheit, die von der Sulfonsäuregruppen enthaltenden Carbonsäurekomponente (a-1) abgeleitet ist, und der Struktureinheit, die von der sulfonsäuregruppenfreien Carbonsäurekomponente (a-2) abgeleitet ist [(a-1)/(a-2)] nicht weniger als 5/95 und nicht mehr als 50/50 beträgt.

**8.** Behandlungsflüssigkeit gemäß einem der Ansprüche 1 bis 7, ferner umfassend ein Neutralisationsmittel (C).

**9.** Behandlungsflüssigkeit gemäß Anspruch 8, wobei das Neutralisationsmittel (C) eine wasserlösliche Aminverbindung ist.

**10.** Behandlungsflüssigkeit gemäß Anspruch 8 oder 9, wobei ein Gehalt an Neutralisationsmittel (C) in der Behandlungsflüssigkeit nicht weniger als 0,1 Massen-% und nicht mehr als 5 Massen-% beträgt.

**11.** Oberflächenbehandeltes, wenig Flüssigkeit absorbierendes Substrat, umfassend eine Oberflächenbehandlungsschicht, gebildet aus der Behandlungsflüssigkeit gemäß einem der Ansprüche 1 bis 10.

**12.** Tintenset, umfassend die Behandlungsflüssigkeit gemäß einem der Ansprüche 1 bis 10 und eine wasserbasierte Tinte, die mindestens einen Farbstoff (I) und Wasser umfasst.

**13.** Tintenset gemäß Anspruch 12, wobei der Farbstoff (I) ein Pigment ist, das in Form von Partikeln vorliegt, die durch Dispergieren des Pigments mit einem Polymer (II-1) erhalten werden.

**14.** Verfahren zur Herstellung eines Bildes, umfassend den folgenden Schritt 1 und den folgenden Schritt 2:

Schritt 1: das Aufbringen der Behandlungsflüssigkeit gemäß einem der Ansprüche 1 bis 10 auf eine Oberfläche eines wenig Flüssigkeit absorbierenden Substrats und das Trocknen der Behandlungsflüssigkeit auf dem wenig Flüssigkeit absorbierenden Substrat, um ein oberflächenbehandeltes, wenig Flüssigkeit absorbierendes Substrat zu erhalten; und
Schritt 2: das Drucken von Zeichen oder Bildern auf eine behandelte Oberfläche des in Schritt 1 erhaltenen oberflächenbehandelten, wenig Flüssigkeit absorbierenden Substrats durch ein Tintenstrahldruckverfahren.

**15.** Verwendung der Behandlungsflüssigkeit gemäß einem der Ansprüche 1 bis 10 zur Oberflächenbehandlung eines Substrats, auf dessen Oberfläche Zeichen oder Bilder unter Verwendung einer Tinte gebildet werden sollen.

**Revendications**

**1.** Liquide de traitement comprenant une résine de polyester (a) sous forme d'une émulsion de celle-ci et d'un solvant (b-1) présentant un paramètre de solubilité d'au moins 15 $(MPa)^{1/2}$ et d'au plus 27 $(MPa)^{1/2}$, dans lequel :

la résine de polyester (a) comprend des groupes d'acide sulfonique, et une densité des groupes d'acide sulfonique dans la résine de polyester (a) n'est pas inférieure à 0,1 mmol/g et n'est pas supérieure à 0,8 mmol/g ;
**caractérisé en ce que**
la teneur en résine de polyester (a) dans le liquide de traitement n'est pas inférieure à 15 % en masse ; et
la teneur en solvant (b-1) dans le liquide de traitement n'est pas inférieure à 1 % en masse et pas supérieure à 10 % en masse.

**2.** Liquide de traitement selon la revendication 1, dans lequel une valeur de pH du liquide de traitement n'est pas inférieure à 5 et pas supérieure à 10, mesurée à 25 °C.

**3.** Liquide de traitement selon la revendication 1 ou la revendication 2, dans lequel une taille moyenne de particules de la résine de polyester (a) sous forme d'émulsion n'est pas inférieure à 10 nm et pas supérieure à 150 nm, dans lequel la taille moyenne de particules de la résine de polyester (a) est déterminée comme indiqué sous l'intitulé correspondant dans les exemples.

**4.** Liquide de traitement selon l'une quelconque des revendications 1 à 3, dans lequel une masse moléculaire moyenne en poids de la résine de polyester (a) n'est pas inférieure à 5 000 et pas supérieure à 30 000, dans lequel la masse moléculaire moyenne en poids de la résine de polyester (a) est déterminée comme indiqué sous l'intitulé correspondant dans les exemples.

**5.** Liquide de traitement selon l'une quelconque des revendications 1 à 4, dans lequel la résine de polyester (a) comprend au moins un motif constitutif sélectionné dans le groupe consistant en un motif constitutif dérivé de l'acide sulfoisophtalique et un motif constitutif dérivé de l'acide sulfotéréphtalique.

**6.** Liquide de traitement selon l'une quelconque des revendications 1 à 4, dans lequel la résine de polyester (a) comprend un motif constitutif dérivé d'un composant acide carboxylique contenant un groupe sulfonique (a-1) et un motif constitutif dérivé d'un composant acide carboxylique exempt de groupe sulfonique (a-2).

7. Liquide de traitement selon la revendication 6, dans lequel un rapport molaire du motif constitutif dérivé du composant acide carboxylique contenant un groupe sulfonique (a-1) et du motif constitutif dérivé du composant acide carboxylique exempt de groupe sulfonique (a-2)[(a-1)/(a-2)] n'est pas inférieur à 5/95 et pas supérieur à 50/50.

8. Liquide de traitement selon l'une quelconque des revendications 1 à 7, comprenant en outre un agent neutralisant (C).

9. Liquide de traitement selon la revendication 8, dans lequel l'agent neutralisant (C) est une amine soluble dans l'eau.

10. Liquide de traitement selon la revendication 8 ou la revendication 9, dans lequel la teneur en agent neutralisant (C) dans le liquide de traitement n'est pas inférieure à 0,1 % en masse et pas supérieure à 5 % en masse.

11. Support à faible absorption de liquide traité en surface comprenant une couche de traitement de surface formée à partir du liquide de traitement selon l'une quelconque des revendications 1 à 10.

12. Ensemble d'encres comprenant le liquide de traitement selon l'une quelconque des revendications 1 à 10, et une encre à base d'eau comprenant au moins un colorant (I) et de l'eau.

13. Ensemble d'encres selon la revendication 12, dans lequel le colorant (I) est un pigment présent sous forme de particules obtenues par dispersion du pigment avec un polymère (II-1).

14. Procédé de formation d'images comprenant les étapes 1 et 2 suivantes :

    Étape 1 : appliquer le liquide de traitement selon l'une quelconque des revendications 1 à 10 sur une surface d'un support à faible absorption de liquide, et sécher le liquide de traitement sur le support à faible absorption de liquide pour obtenir un support à faible absorption de liquide traité en surface ; et
    Étape 2 : imprimer des caractères ou des images sur une surface traitée du support à faible absorption de liquide traité en surface obtenu à l'étape 1 par un procédé d'impression à jet d'encre.

15. Utilisation du liquide de traitement selon l'une quelconque des revendications 1 à 10 pour le traitement de surface d'un substrat sur la surface duquel des caractères ou des images doivent être formés en utilisant une encre.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013072045 A
- JP 2009241586 A
- JP 2000335093 A
- WO 2019188852 A1
- EP 3778249 A1

**Non-patent literature cited in the description**

- HANSEN SOLUBILITY PARAMETERS. A User' Handbook
- Solubility Parameter Values. Polymer Handbook. John Wiley & Sons, Inc., 1999, vol. VII, 675-714